# EUROPEAN PATENT APPLICATION

(11) **EP 4 653 510 A1**
(43) Date of publication of application: **26.11.2025**
(21) Application number: 24305800.5
(22) Date of filing: 22.05.2024
(51) Int. Cl.: C09K 5/16

(54) **REACTIVE WORKING FLUIDS FOR CYCLIC THERMODYNAMIC CONVERSION MACHINES AND CYCLIC THERMODYNAMIC CONVERSION MACHINES COMPRISING SAID WORKING FLUID**

(71) Applicant: Centre National de la Recherche Scientifique, 75016 Paris (FR); Université de Lorraine, 54000 Nancy (FR)
(72) Inventor: LASALA, Silvia, 54760 FAULX (FR); HERBINET, Olivier, 54000 NANCY (FR); HADJADJ, Rachid, 54000 NANCY (FR); VILAS BOAS, Sérgio, 54000 NANCY (FR)
(74) Representative: IPAZ

(57) **Abstract**

Reactive working fluid for cyclic thermodynamic conversion machines, said working fluid, comprising a monomer/dimer couple capable of reversibly associating/dissociating, during each thermodynamic cycle, by covalent bond(s) formation/breakage; said monomer/dimer couple being of formula 2(Rᵢ-X^{•}) / Rᵢ-X-X-Rᵢ, wherein Rᵢ is/are substituent(s) bonded to each atom X, i being equal to 1, 2, 3, 4, 5 or 6, each Rᵢ is different from X, j is the number of substituent(s) Rᵢ bonded to each atom X, j being comprised between 1 and 6, each Rᵢ and X are selected from F, Cl, Br, I, O, S, B, N, P and C, each Rᵢ is an atom at its lowest valence state; and for j equal to 1: X is O, and R₁ is F, Cl, Br or I, or X is S, and R₁ is F, Br or I, or X is B, P, N, Cl, Br or I, and R₁ is O, or X is B, P, N, Br or I, and R₁ is S; and for j equal to 2: X is selected from B, P, N, Cl, Br or I, and R₁ and R₂ are selected from F, Cl, Br, 5 or I, or X is selected from B, P, Cl, Br or I, and R₁ and R₂ are selected from F, Cl, Br, S, O or I.

## Description

### Field of the invention

The present invention relates to the field of working fluids.

In particular, the present invention deals with a working fluid intended to be used in thermodynamic cycles.

The present invention also relates to cyclic thermodynamic conversion machines.

Especially but not exclusively, the present invention deals with heat pumps, refrigeration machines and power plants/engines.

### Background to the invention

Thermodynamic machines are based on the cyclic conversion of one or more types of energy entering these machines into another type of useful energy. In thermodynamic machines, the different forms of energy exchanged with the environment are internally converted one in another by an energy vector, the working fluid.

The working fluids of the state of the art can be organic or inorganic. The most commonly used working fluids are water in steam power plants, air and combustion products in gas turbines, and organic refrigerants in heat pumps and refrigeration cycles. Ideally, a working fluid should be chemically stable, that is, no irreversible chemical reaction, in particular side reaction, should take place along the thermodynamic cycle of energy conversion.

However, if used outside their thermal stability range, the organic working fluids of the state of the art tend to form new compound(s) through irreversible side reactions over thermodynamic cycles, which results in a decreased efficiency of the thermodynamic machine.

Each type of thermodynamic machine will exhibit different operating modes. Nevertheless, the working fluid in a thermodynamic machine will usually change its thermodynamic properties according to a thermodynamic cycle comprising four thermodynamic transformations. It may also exist several variants of the operating mode for a same type of the thermodynamic machines. In power plants, the working fluid may follow either a Rankine cycle, or a Brayton cycle, or a Stirling cycle, in each of which it undergoes at least four successive thermodynamic transformations. In heat pumps and refrigeration machines, the working fluid follows an inversed thermodynamic cycle in which it undergoes at least four successive thermodynamic transformations.

In each case, the energy to be provided to the cyclic thermodynamic conversion machine for the operation is in the form of mechanical energy, and thermal energy. Usually, the mechanical energy is provided to the system by a pump or a compressor powered by electrical or mechanical energy. The thermal energy is provided to the cycle by an external heat source and through a heat exchanger. In heat pumps and refrigeration machines operating in refrigeration/heating mode and most of power plants, the electrical or mechanical energy will be used to compress the working fluid. In heat pumps, and refrigeration machines operating in refrigeration/heating mode and most of power plants, the input thermal energy will be used to heat up the working fluid. The useful effect is the quantity of thermal energy transferred to the environment to be heated, in the case of heat pumps, or the quantity of thermal energy removed from the environment to be cooled down, in the case of refrigeration systems, or the quantity of mechanical energy released during the expansion process.

It still remains a strong need to increase the performance of thermodynamic machines.

### Summary of the invention

An object of the invention is to provide working fluids:
- overcoming the drawbacks of the working fluids of the state of the art,
- allowing to decrease the operating cost of the thermodynamic machines of the state of the art,
- allowing to decrease the size of the thermodynamic machines of the state of the art, and/or
- allowing to increase performance of the thermodynamic machines of the state of the art.

Another object of the invention is to provide cyclic thermodynamic conversion machines:
- overcoming the drawbacks of the thermodynamic machines of the state of the art,
- with lower operating costs,
- having smaller sizes, and/or
- having higher yield and performances compared to the thermodynamic machines of the state of the art.

To this end, there is provided a reactive working fluid for cyclic thermodynamic conversion machines, said working fluid, comprising a monomer/dimer couple. The working fluid may be described as forming a monomer/dimer couple. Preferably, the working fluid comprises, or may consist in, one or a mixture of monomer/dimer couple(s). The monomer/dimer couple is capable of reversibly associating/dissociating, during each thermodynamic cycle, by covalent bond(s) formation/breakage.

Preferably, the monomer/dimer couple or each of the monomer/dimer couple of the mixture is of formula 2(RrX') / Rᵢ-X-X-Rᵢ.

Preferably, Rᵢ is/are substituent(s) bonded to each atom X. Preferably, i is equal to 1, 2, 3, 4, 5 or 6.

Each different Rᵢ may be a different atom. For instance, R₁ may be different from R₂ (and may be different from R₃, R₄ and Rs); the same applies mutatis mutandis for R₂, R₃, R₄, R₅ and Re.

Preferably, j is the number of substituent(s) Rᵢ bonded to each atom X. Preferably, j is comprised between 1 and 6.

Preferably, each Rᵢ is different from X.

Preferably, one considered substituent (Rᵢ) is different from or identical to another, several or each of the other substituents.

Preferably, each Rᵢ and X are selected from F, Cl, Br, I, O, S, B, N, P and C.

Preferably, each Rᵢ is an atom at its lowest valence state.

Preferably, for j equal to 1, that is R₁-X-X-R₁:
- X is O, and R₁ is F, Cl, Br or I,
- X is S, and R₁ is F, Br or I,
- X is B, P, N, Cl, Br or I, and R₁ is O, and/or
- X is B, P, N, Br or I, and R₁ is S.

Preferably, for j equal to 2:
- X is selected from B, P, N, Cl, Br or I, and
- R₁ and R₂ are selected, preferably independently selected, from F, Cl, Br, S or I.

Preferably, for j equal to 2:
- X is selected from B, P, Cl, Br or I, and,
- R₁ and R₂ are selected, preferably independently selected, from F, Cl, Br, S, O or I.

Preferably, the two atoms X of a/each dimer of a/each considered monomer/dimer couple are the same atom.

The index i may be identical or may different from the number j of substituent bonded to each atom X. The index i may be lower than or equal to the number j of substituent bonded to each atom X.

Preferably, j is equal to 1, 2, 3, 4, 5 or 6, more preferably to 2, 3, 4, 5 or 6 and even more preferably to 3, 4, 5 or 6.

Preferably, the number j of substituent(s) Rᵢ bonded to each atom X is the same for each atom X of a considered couple, preferably for each atom X of a/each monomer of a considered couple and for each atom X of a/each monomer of a considered couple.

A cyclic thermodynamic conversion machine is said thermodynamic machine.

Preferably, a monomer, more preferably each monomer of each monomer/dimer couple, is of formula Rᵢ-X^{•}.

"X^{•}" is a radical. Preferably, "X^{•}" is an atom with one single unpaired valence electron.

Preferably, a dimer, more preferably each dimer of each monomer/dimer couple, is of formula Rᵢ-X-X-Rᵢ.

Preferably, each X and each Ri are an atom, more preferably one single atom. Preferably, X and Ri are not or are different from a chemical group. It may be understood by chemical group a group of atoms.

Preferably, the number j of substituent(s) Rᵢ bonded to each atom X of a monomer/dimer couple, preferably of each monomer/dimer couple, is equal to 1, 2, 3, 4, 5 or 6. Preferably, the number j of substituent(s) Rᵢ bonded to the atom X of a monomer, preferably of each monomer of each monomer/dimer couple, is equal to 1, 2, 3, 4, 5 or 6.

Preferably, the number of substituent(s) Rᵢ of a/each dimer, preferably of a/each dimer of a/each monomer/dimer couple, is equal to 2, 4, 6, 8, 10 or 12. Preferably, the number of substituent(s) Rᵢ of a/each dimer, preferably of a/each dimer of a/each monomer/dimer couple, is equal to j/2.

Preferably, a/each monomer/dimer couple, more preferably a/each monomer and/or a/each dimer, even more preferably a/each monomer and/or a/each dimer of a/each monomer/dimer couple, comprises up to three different atoms. Preferably, a/each monomer/dimer couple, more preferably each monomer and each dimer of a/each monomer/dimer couple, comprises one and the same atom (i.e. each substituent (Rᵢ) is the same atom), two different atoms or three different atoms.

Preferably, the substituents (Rᵢ) of a/each monomer/dimer couple, the set of substituents (Rᵢ) of a/each monomer/dimer couple or the whole of the substituents (Rᵢ) of a/each monomer/dimer couple comprises, more preferably consists of:
- a single atom (for j equal to 1), or
- one and the same atom (for j equal or higher than 2), or
- two different atoms (for j equal or higher than 2).

One considered substituent (Rᵢ) of a/each monomer:
- may be identical to each other substituents (for j equal or higher than 2), to several other substituents (for higher than 2) or to the other substituent (for j equal to 2) or to one other substituent (for j equal or higher than 2), and/or
- may be different from the other substituent (for j equal to 2) or from one other substituent (for j equal or higher than 2) or from several other substituents (for j higher than 2) or from any other substituent (for j equal or higher than 2).

One considered substituent (Rᵢ) of a/each dimer:
- may be identical to each other substituents, to several other substituents, to the other substituent, and/or
- may be different to the other substituent (for j equal to 1) or to several other substituents for j equal or higher than 2.

Preferably, X as a valence comprised between 2 and 7.

Preferably, X has valence equal to 2, 3, 4, 5, 6 or 7, more preferably to 3, 4, 5, 6 or 7 and even more preferably to 4, 5, 6 or 7.

The working fluid may be defined as, or may comprise, a chemical compound. The compound may be defined as, or may consist in, the monomer, that is the working fluid in its dissociated form, or may be defined as, or may consist in, the dimer, that is the working fluid in its associated form.

This invention can be defined as working fluids or compounds, used or intended to be used in thermodynamic machines, having the particularity of being reactive, over the phases of one thermodynamic cycle, instead of being inert. It can be understood by reactive working fluids or compounds: fluids having the chemical property of reversibly associating/dissociating, preferably to form dimer/monomer respectively, during at least two phases of each thermodynamic cycle, more preferably during each thermodynamic cycle.

Preferably, the working fluid or the compound dissociates or associates, to form monomers or to form dimers respectively, during each phase of the thermodynamic cycle. Preferably, the working fluid or the compound dissociates and associates, to form monomers and to form dimers respectively, during at least two phases of each thermodynamic cycle, more preferably during each thermodynamic cycle.

Preferably, the working fluid or the compound reversibly associates/dissociates over phases, or thermodynamic phases, of each thermodynamic cycle. A thermodynamic phase may be described as a thermodynamic transformation that the working fluid undergoes during the thermodynamic cycle. A thermodynamic transformation may be described as a thermodynamic state change. The skilled person has the general knowledge to figure out the four transformations carried out during a given thermodynamic cycle.

Preferably, each dimer Rᵢ-X-X-Rᵢ of the working fluid reversibly dissociates into two monomers Rᵢ-X^{•} of the working fluid, during at least one phase of each thermodynamic cycle, and two monomers Rᵢ-X^{•} of the working fluid reversibly associates into one dimer Rᵢ-X-X-Rᵢ of the working fluid, during at least another phase of each thermodynamic cycle, as follows: Rᵢ-X-X-Rᵢ 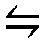 2(Rᵢ-X^{•}).

The working fluid or the compound may undergo or may be able to or may be arranged to undergo:
- a dissociation, at least partly, into monomers during a compression phase of the thermodynamic cycle,
- an association, at least partly, into dimers during a cooling phase of the thermodynamic cycle,
- an association, at least partly, into dimers during an expansion phase of the thermodynamic cycle,
- a dissociation, at least partly, into monomers during a heating phase of the thermodynamic cycle.

According to the present description, it is understood by cooling phase and heating phase the cooling of the working fluid and the heating of the working fluid.

During the heating and/or the cooling phase, the working fluid may stay in the same state of matter, in gaseous state for instance, or may change, partly or in its entirety, of state of matter, from gaseous to liquid and conversely.

When the working fluid undergoes a change of state of matter, which may be partial or complete, during the heating and/or the cooling phase, the cooling phase may be referred to as condensation phase and the heating phase may be referred to as evaporation phase.

The cooling phase may comprise a condensation of the working fluid. The cooling phase may be a condensation phase. The heating phase may comprise an evaporation of the working fluid. The heating phase may be an evaporation phase.

The working fluid or the compound used in a power Brayton or Rankine cycle may undergo or may be able to or may be arranged to undergo:
- a dissociation, at least partly, preferably in its entirety, into monomers during a compression phase of the thermodynamic cycle,
- an association, at least partly, preferably partly only, into dimers during a cooling phase of the thermodynamic cycle,
- an association, at least partly, preferably in its entirety, into dimers during an expansion phase of the thermodynamic cycle,
- a dissociation, at least partly, preferably partly only, into monomers during a heating phase of the thermodynamic cycle.

The working fluid or the compound used in a heat pump may undergo or may be able to or may be arranged to undergo:
- a dissociation, at least partly, preferably in its entirety into monomers during a compression phase of the thermodynamic cycle,
- an association, at least partly, preferably in its entirety, into dimers during a cooling phase of the thermodynamic cycle,
- an association, at least partly, preferably partly only, into dimers during an expansion phase of the thermodynamic cycle,
- a dissociation, at least partly, preferably partly only, into monomers during a heating phase of the thermodynamic cycle.

The working fluid or the compound used in a refrigeration cycle may undergo or may be able to or may be arranged to undergo:
- a dissociation, at least partly, preferably in its entirety, into monomers during a compression phase of the thermodynamic cycle,
- an association, at least partly, preferably partly only, into dimers during a cooling phase of the thermodynamic cycle,
- an association, at least partly, preferably in its entirety, into dimers during an expansion phase of the thermodynamic cycle,
- a dissociation, at least partly, preferably in its entirety, into monomers during a heating phase of the thermodynamic cycle.

Preferably, the monomer/dimer couple is: 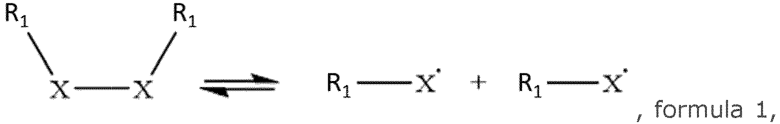 wherein X is O, and R₁ is F, Cl, Br or I; or X is S, and R₁ is F, Br or I, preferably X has a valence 2, and/or 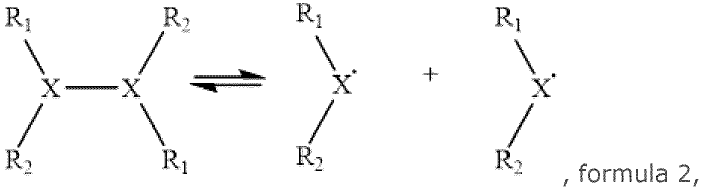 wherein X is B, P, N, Cl, Br or I and R₁ and R₂ is/are selected, preferably independently selected, from F, Cl, Br and I, preferably X has a valence 3, and/or 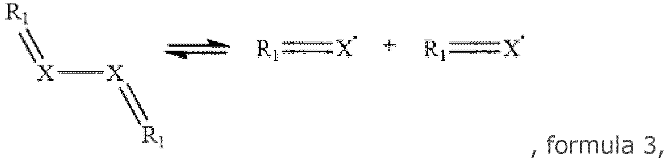 wherein X is B, P, N, Cl, Br or I and R₁ is O; or X is B, P, N, Br or I and R₁ is S, preferably X has a valence 3, and/or 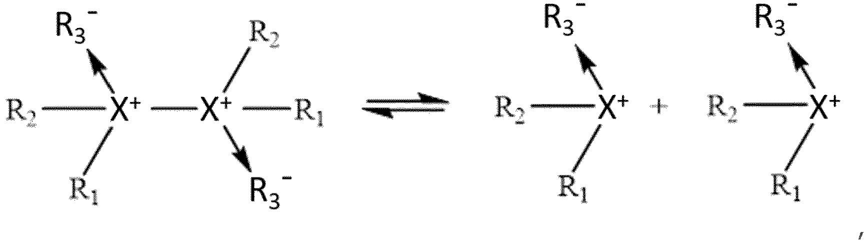 formula 4, wherein X is N, and R₁ and R₂ is/are selected, preferably independently selected, from F, Cl, Br or I, and R₃ is O, preferably X has a valence 3, preferably the dimer/monomer couple of formula comprises dative bond(s), preferably the dimer comprises two dative bonds and the monomer comprises one dative bond, more preferably the dative bond(s) is between X and an R₃⁻ (the dative bond(s) are depicted by the black arrow(s) in formula 4 wherein the two electrons of the bond originate from X, and/or 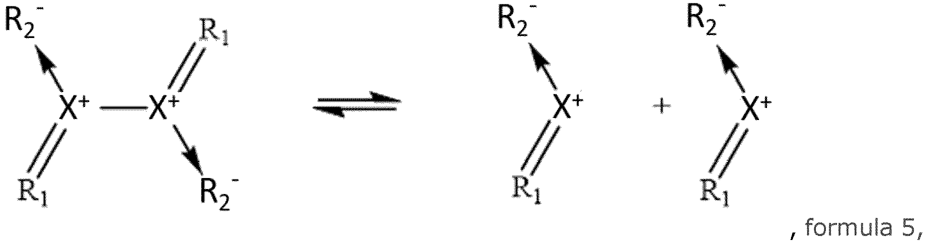 wherein X is N, and R₁ is S, and R₂ is O, preferably X has a valence 3, preferably the dimer/monomer couple of formula comprises dative bond(s), preferably the dimer comprises two dative bonds and the monomer comprises one dative bond, more preferably the dative bond(s) is between X and an R₂⁻ (the dative bond(s) are depicted by the black arrow(s) in formula 5 wherein the two electrons of the bond originate from X, 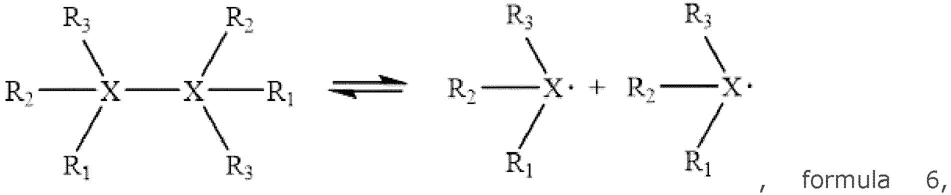 wherein X is C or S, and R₁, R₂ and R₃ are selected, preferably independently selected, from F, Cl, Br and I, preferably X has a valence 4, and/or 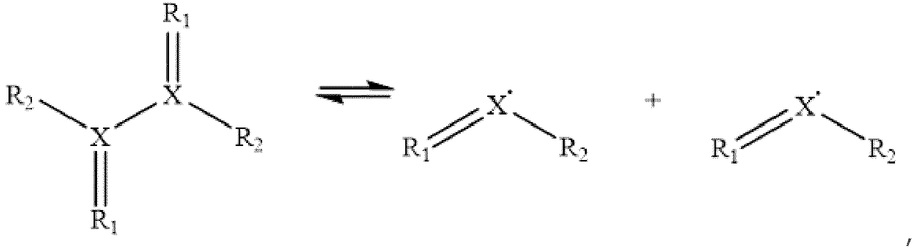 formula 7, wherein X is C or S, and R₁ is selected from O and S, and R₂ is selected from F, Cl, Br and I, preferably X has a valence 4, and/or 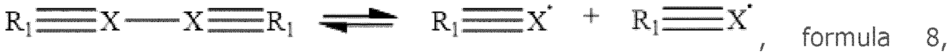 wherein X is C or S, and R₁ is selected from B, P and N, preferably X has a valence 4, and/or 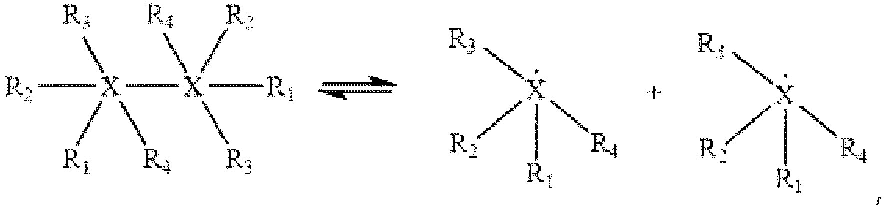 formula 9, wherein X is P, Cl, Br or I, and R₁, R₂, R3 and R4 are selected, preferably independently selected, from F, Cl, Br and I, preferably X has a valence 5, and/or 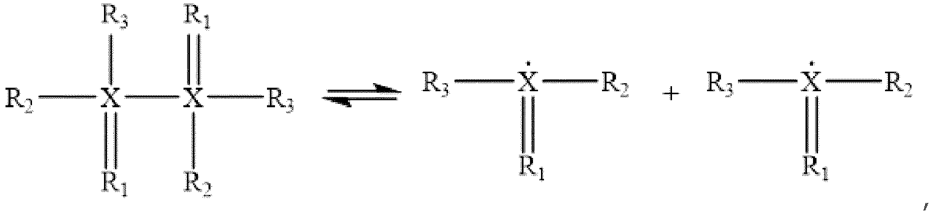 formula 10, wherein X is P, Cl, Br or I, and R₁ is selected from O and S, and R₂ and R₃ are selected, preferably independently selected, from F, Cl, Br and I, preferably X has a valence 5, and/or 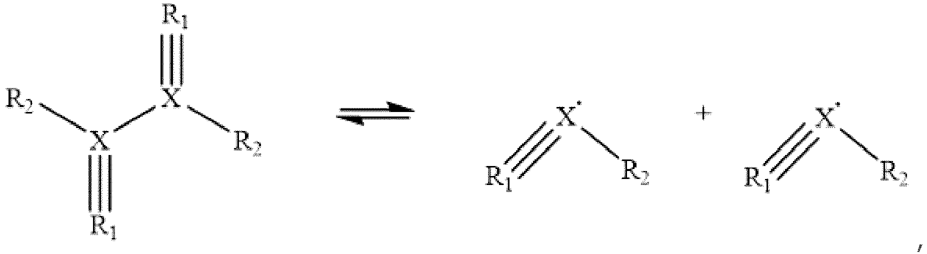 formula 11, wherein X is P, Cl, Br or I, and R₁ is selected from B, P, and N and R₂ is selected from F, Cl, Br and I, preferably X has a valence 5, and/or 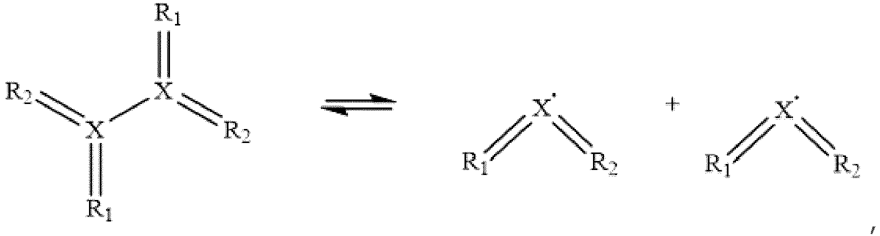 formula 12, wherein X is P, Cl, Br or I, and R₁ and R₂ are selected, preferably independently selected, from O and S, preferably X has a valence 5, and/or 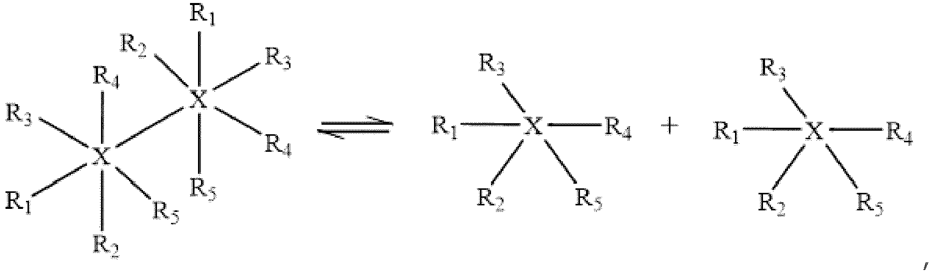 formula 13, wherein X is S, and R₁, R₂, R₃, R₄ and R₅ are selected, preferably independently selected, from F, Cl, Br and I, preferably X has a valence 6, and/or 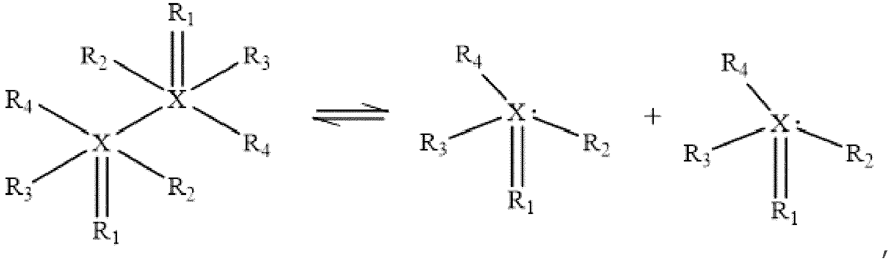 formula 14, wherein X is S, and R₁ is selected from O and S, and R₂, R₃ and R₄ are selected, preferably independently selected, from F, Cl, Br and I, preferably X has a valence 6, and/or 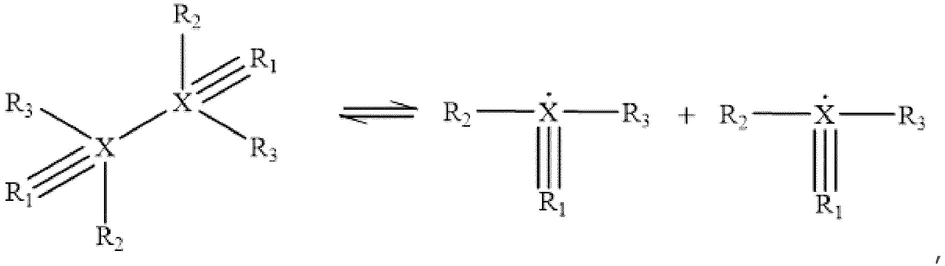 formula 15, wherein X is S, and R₁ is selected from B, P and N, and R₂ and R₃ are selected, preferably independently selected, from F, Cl, Br and I, preferably X has a valence 6, and/or 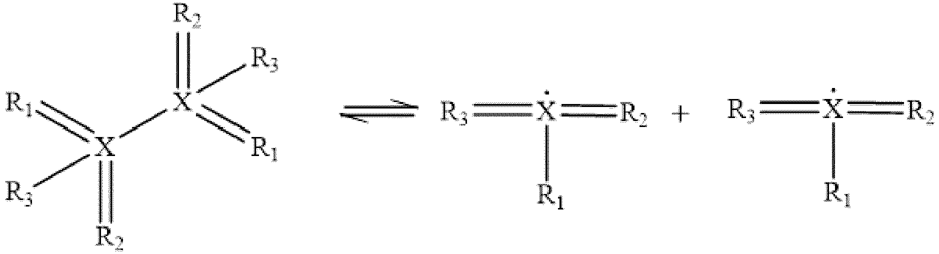 , formula 16, wherein X is S, and R₁ is selected from O and S, and R₂, R₃ and R₄ are selected, preferably, independently selected, from F, Cl, Br and I, preferably X has a valence 6, and/or 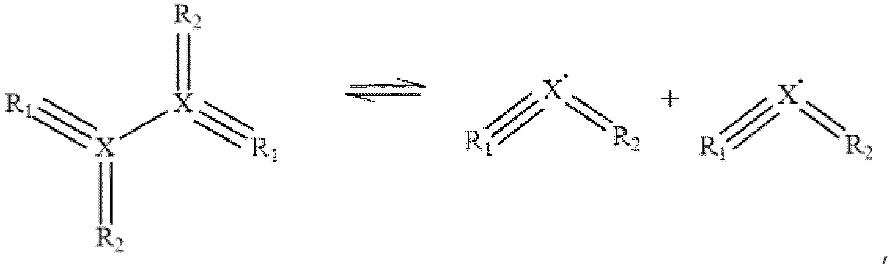 formula 17, wherein X is S, and R₁ is selected from B, P and N, and R₂ are selected, preferably independently selected, from O and S, preferably X has a valence 6, and/or 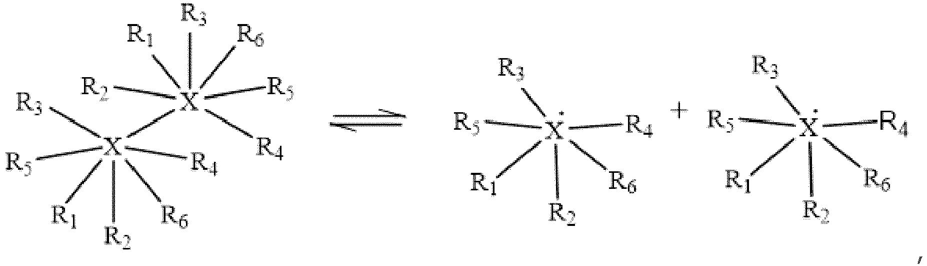 formula 18, wherein X is selected from Cl, Br and I, and R₁, R₂, R₃, R₄, R₅, R₆ and R₇ are selected, preferably independently selected, from F, Cl, Br and I, preferably X has a valence 7, and/or 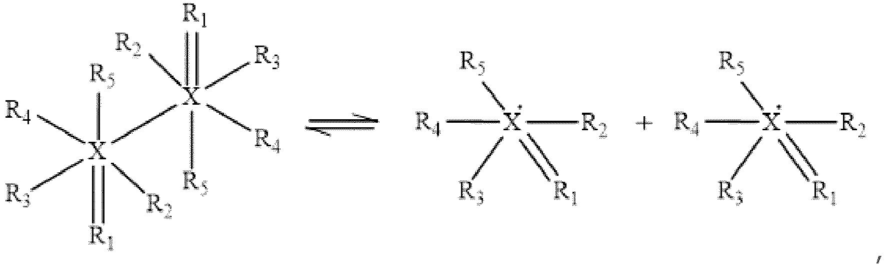 formula 19, wherein X is selected from Cl, Br and I, and R₁ is O or S, and R₂, R₃, R₄, R₅ are selected, preferably independently selected, from F, Cl, Br and I, preferably X has a valence 7, and/or 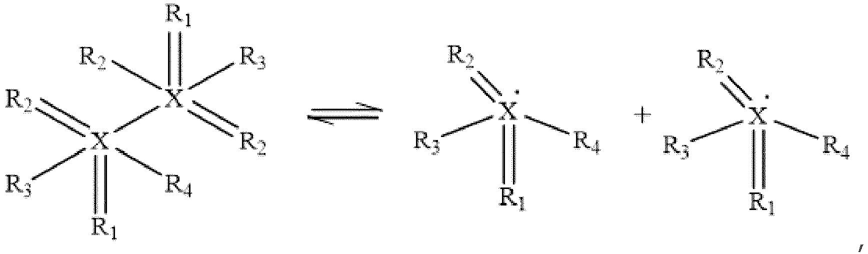 formula 20, wherein X is selected from Cl, Br and I, and R₁ and R₂ is O or S, and R₃ and R₄, are selected, preferably, independently selected, from F, Cl, Br and I, preferably X has a valence 7, and/or 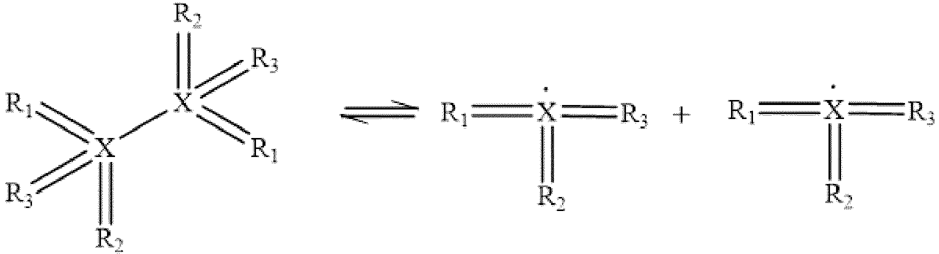 , formula 21, wherein X is selected from Cl, Br and I, and R₁, R₂ and R₃ are selected, preferably independently selected, from O and S, preferably X has a valence 7, and/or 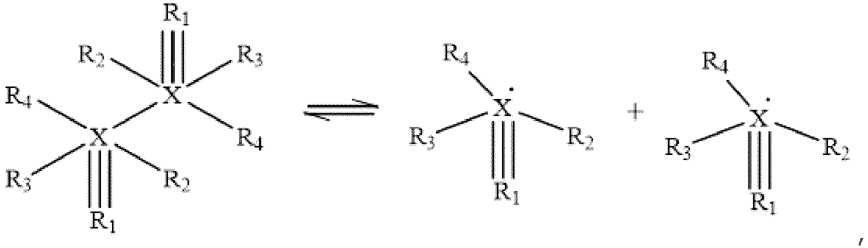 formula 22, wherein X is selected from Cl, Br and I and R₁ is B, P or N, and R₂, R₃ and R₄ are selected, preferably independently selected, from F, Cl, Br and I, preferably X has a valence 7, and/or 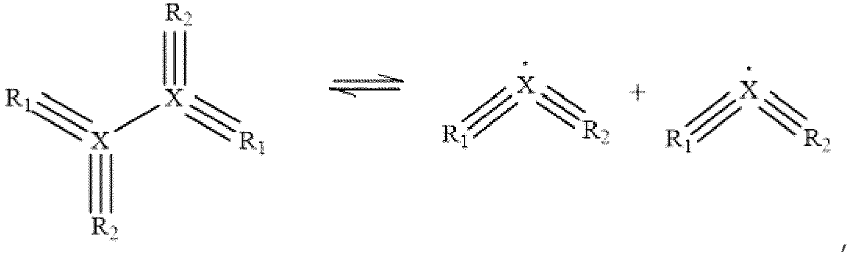 formula 23, wherein X is selected from Cl, Br and I, and R₁ and R₂ are selected, preferably independently selected, from B, P and N, preferably X has a valence 7.

It may be understood by "independently selected": selected independently of each other, that is Rᵢ may be selected: to be identical to each other, so that one Rᵢ is different from another Rᵢ, so that one Rᵢ is identical to another Rᵢ, so that one Rᵢ is different from several others Rᵢ, so that one Rᵢ is identical to several others Rᵢ or so that Rᵢ are different from each other.

Preferably, monomers, more preferably each monomer of a couple, even more preferably each monomer of each couple, are radicals or in radical form, more preferably having a single unpaired valence electron.

Preferably, dimers, more preferably each dimer of a couple, even more preferably each dimer of each couple, have only paired valence electrons, that is are not radicals, in other words have no unpaired valence electron.

According to the invention, unless otherwise specified, when Rᵢ is selected from a listed group of atoms, R₁, R₂, R₃, R₄, R₅ and/or R₆ are selected independently from one another among the listed group of atoms.

Preferably, the valence/valences of the atom(s) of each couple, preferably of each monomer and each dimer, is:
- Fluorine (F): 1, and/or
- Chlorine (Cl): 1, 3, 5 or 7, and/or
- Bromine (Br): 1, 3, 5 or 7, and/or
- Iodine (I): 1, 3, 5 or 7, and/or
- Oxygen (O): 2, and/or
- Sulfur (S): 2, 4 or 6, and/or
- Boron (B): 3, and/or
- Nitrogen (N): 3, and/or
- Phosphorus (P): 3 or 5, and/or
- Carbon (C): 4.

Preferably, each substituent Rᵢ of each monomer and dimer of each couple is in its lowest valence.

The working fluid may comprise one monomer/dimer couple selected in the couples of listed, that is of formula 1 to 23, or may comprise a mixture of monomer/dimer couples selected in the couples listed, that is of formula 1 to 23, or may consist of one monomer/dimer couple selected in the couples listed, that is of formula 1 to 23, or may consist in a mixture of monomer/dimer couples selected in the couples listed, that is of formula 1 to 23.

The working fluid may consist in one monomer/dimer couples or in a mixture of two or more monomer/dimer couples selected from the list, that is of formula 1 to 23.

Preferably, the monomer/dimer couple or each of the monomer/dimer couples or the mixture of two or more monomer/dimer couples is selected from the list of formulae 1 to 23.

Preferably, during each thermodynamic cycle, the monomer/dimer couple undergoes at least one covalent bond formation and at least one covalent bond breakage. Preferably, during each thermodynamic cycle, the monomer/dimer couple undergoes one, preferably a single, covalent bond formation and one, preferably a single, covalent bond breakage.

Preferably, the working fluid is unable to form or to incur breakage of van der Waals bonds between dimers, between monomers and/or between monomers and dimers.

According to another aspect of the invention, there is also provided the use of the reactive working fluid according to the invention in a cyclic thermodynamic conversion machine.

According to another aspect of the invention, there is also provided the use of the reactive working fluid according to the invention in a heat pump, in a power plant and/or in a refrigeration machine.

According to the invention, there is also provided a cyclic thermodynamic conversion machine comprising:
- the reactive working fluid according to the invention,
- means for compressing the reactive working fluid,
- means arranged to cool down the reactive working fluid,
- means arranged to expand the reactive working fluid, and
- means arranged to heat up the working fluid.

Preferably, the thermodynamic machine operating in power mode is arranged to:
- dissociate, at least partly, preferably in its entirety, the working fluid into monomers within the means for compressing the working fluid,
- associate, at least partly, preferably partially only, the working fluid into dimers within the means arranged to cool down the working fluid,
- associate, at least partly, preferably in its entirety, the working fluid into dimers within the means arranged to expand the working fluid,
- dissociate, at least partly, preferably partly only, the working fluid into monomers within the means arranged to heat up the working fluid.

Preferably, the thermodynamic machine operating in heat pump mode is arranged to:
- dissociate, preferably in its entirety, the working fluid into monomers within the means for compressing the working fluid,
- associate, preferably in its entirety, the working fluid into dimers within the means arranged to cool down the working fluid,
- associate, preferably partly only, the working fluid into dimers within the means arranged to expand the working fluid,
- dissociate, preferably partly only, the working fluid into monomers within the means arranged to heat the working fluid.

Preferably, the thermodynamic machine operating in refrigeration mode, is arranged to:
- dissociate, preferably in its entirety, the working fluid into monomers within the means for compressing the working fluid,
- associate, preferably partly only, the working fluid into dimers within the means arranged to cool down the working fluid,
- associate, preferably in its entirety, the working fluid into dimers within the means arranged to expand the working fluid,
- dissociate, preferably in its entirety, the working fluid into monomers within the means arranged to heat the working fluid.

Preferably, a heating machine denotes or refers to a machine providing heating as useful effect and a refrigeration machine denotes or refers to a machine providing cooling as useful effect.

Preferably, the invention also provides a machine that reversibly operates in heating mode and cooling mode, such as a reversible heat pump for example.

According to the present description, cyclic thermodynamic conversion machines may refer to a thermal machine, or heat or thermal engine.

Preferably but not exclusively, according to the present description, the thermodynamic machine is a heat pump, a refrigeration machine, or a power plant. By power plant, it may be understood: the assembly of a power plant dedicated to power generation which is the seat of the thermodynamic cycle.

Preferably, the cyclic thermodynamic conversion machine is a heat pump, a power plant, or a refrigeration machine.

Preferably, the reactive working fluid according to the invention is intended, more preferably arranged, even more preferably specifically arranged, to be used and/or be part of any cyclic thermodynamic conversion machine. Preferably, the reactive working fluid according to the invention is intended, more preferably arranged, even more preferably specifically arranged, to be used and/or be part of any cyclic thermodynamic conversion machine arranged to carry out four, preferably successive, thermodynamic phases comprising, preferably, a compression phase, a cooling phase, an expansion phase and a heating phase.

Preferably, the reactive working fluid according to the invention is intended, more preferably arranged, even more preferably specifically arranged, to be used and/or be part of the cyclic thermodynamic conversion machine according to the invention.

Preferably, the reactive working fluid according to the invention is part of any cyclic thermodynamic conversion machine, more preferably is part of the cyclic thermodynamic conversion machine according to the invention.

### Brief description of the drawings

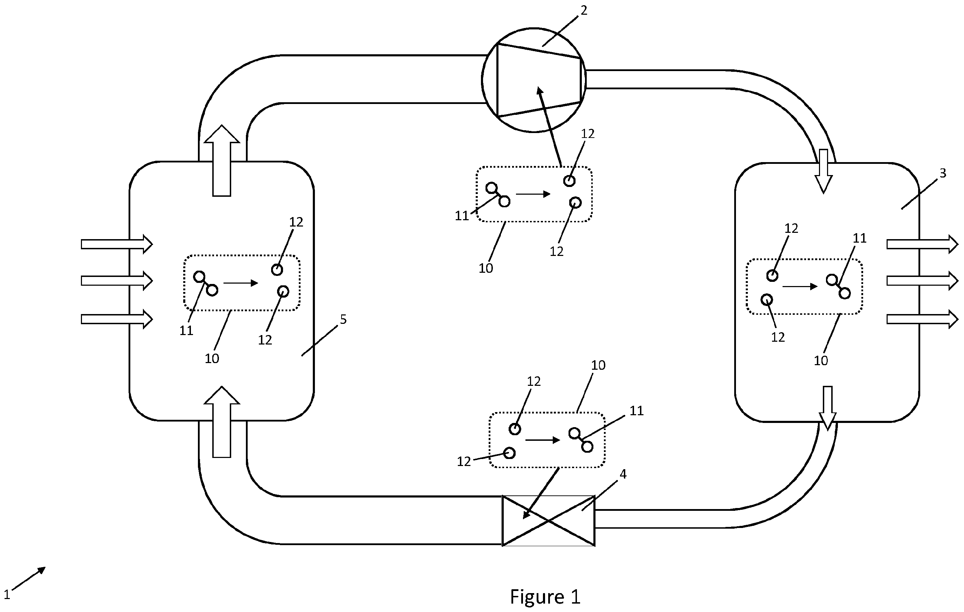

Further inventive objects, features and advantages will become apparent from the following detailed description of several embodiments of the invention with reference to the drawing, in which FIGURE 1 represents the schematic sectional view of a heat pump operating mode, comprising a reactive working fluid according to the invention.

### Detailed description of embodiments of the invention

The embodiments hereinafter described are not restrictive; other embodiments comprising a selection of features described hereinafter may be considered. A selection may comprise features isolated from a set of features (even if this selection is isolated among a sentence comprising other features thereof), if the selection is sufficient to confer a technical advantage or to distinguish the invention from the state of the art. This selection comprises at least a feature, preferably described by its technical function without structural features, or with a part of structural details if this part is sufficient to confer a technical advantage or to distinguish the invention from the state of the art on its own.

In reference to FIGURE 1, it is described a working fluid 10 for cyclic thermodynamic conversion machines 1 according to the invention. The working fluid 10 according to the invention is reactive during each thermodynamic cycle carried out by the thermodynamic machine 1. The working fluid 10 comprises a monomer 11/dimer 12 couple. The working fluid 10 comprises a compound 12 capable of reversibly associating/dissociating, during each thermodynamic cycle, by formation/breakage of covalent bonds.

In other words, the atomic and/or molecular orbitals of the working fluid 10 or the compound 12, which is of the monomers 12 and of the dimers 11, are modified, at least partly, during each phases of the thermodynamic cycle.

According to the invention, the term "reactive" denotes the ability of the compound 12 to reversibly associate/dissociate, during each phase of the thermodynamic cycle, to form a dimer 11/monomer 12 respectively.

The working fluid 10 or the compound 12 undergoes, depending on the phase of the thermodynamic cycle and/or depending on the operating mode of the cyclic thermodynamic conversion machine (power, heat pump or refrigeration) in which the working fluid 10 according to the invention is used, partly only or at least partly or in its entirety:
- a dissociation into monomers 12 during a compression phase of the thermodynamic cycle,
- an association into dimers 11 during a cooling phase of the thermodynamic cycle,
- an association into dimers 11 during an expansion phase of the thermodynamic cycle,
- a dissociation into monomers 12 during a heating phase of the thermodynamic cycle.

The nonrestrictive embodiment illustrated FIGURE 1 and detailed below pertains to the use of the working fluid 10 according to the invention in a thermodynamic machine 1 operating in heating mode, a heat pump 1 for instance.

The working fluid 10 or the compound 12 after the compression phase of the cycle is completely, or at least mostly, in monomers 12 form.

During the cooling phase of the thermodynamic cycle, the working fluid 10 or the compound 12 or the monomers 12 undergoes a complete association into dimers 11, or at least most of the compound 12 or the monomers 12 undergoes an association into dimers 11. After the cooling phase, the working fluid 10 preferably comprises only dimers 11, or comprises mostly dimers 11 and monomers 12 in a lower extent. During the cooling phase, according to the embodiment, the reactive working fluid 10 according to the invention allows to increase the heat quantity released to the environment, which is the useful effect. Indeed, during the cooling phase (that is the cooling of the working fluid 10 or the heating of the environment), the working fluid 10 undergoes an exothermic reaction due to the association of, most of, preferably the whole of, the monomers 12 into dimers 11. Thus, the efficiency of the energy conversion during the thermodynamic cycle is further increased.

During the expansion phase of the thermodynamic cycle, the working fluid 10 or the compound 12 may undergo a further association of some of the monomers 12 into dimers 11. After the expansion phase, the working fluid 10 comprises monomers 12 and dimers 11. During the heating phase, the working fluid 10 undergoes an endothermic reaction due to the dissociation of, at least a part, the dimers 11 into the monomers 12. After the heating phase of the cycle, the working fluid 10 or the compound 12 is partly dissociated in dimers 11 form.

During the heating phase of the thermodynamic cycle, the working fluid 10 or the compound 12 or the dimers 11 undergoes a dissociation into monomers 12. After the heating phase, the working fluid 10 comprises monomers 12 and dimers 11.

Indeed, during the heating phase (that is the heating of the working fluid 10 or the cooling of the environment), the working fluid 10 undergoes an endothermic reaction due to the dissociation of only a part of the dimers 11 into monomers 12. Thus, the efficiency of the energy conversion during the thermodynamic cycle is further increased.

During the compression phase of the thermodynamic cycle, the working fluid 10 or the compound 12 or the dimers 11 undergoes a complete dissociation into monomers 12, or at least most of the compound 12 or the monomers 12 undergoes a dissociation into dimers 11.

The compression phase is described and applies regardless the operating mode of the cyclic thermodynamic conversion machine in which the working fluid 10 according to the invention is used. In other words, during the compression phase of the working fluid 10 according to the invention used in any cyclic thermodynamic conversion machine operating in heating or in cooling or in power mode, the reactive working fluid 10 according to the invention allows to decrease the quantity of energy required for the compression of the fluid (that is the energy required to carry out the thermodynamic cycle). Indeed, during the compression of a reactive working fluid 10 according to the invention, the working fluid 10 undergoes an endothermic reaction due to the dissociation of, at least a part but preferably the whole of, the dimers 11 into monomers 12. In general, the compression of a fluid increases its temperature. However, the endothermic reaction that takes place during the compression phase tends to reduce the temperature increase the working fluid 10 cold. Thus, since the compression of a colder fluid requires less energy than the compression of a hot fluid, the efficiency of the thermodynamic cycle is further increased.

According to the present description, the environment or external environment, denotes the fluid, preferably the gas, preferably the surrounding atmosphere, in which the working fluid 10, preferably the component in which the working fluid 10 is circulating during the cooling phase and/or the heating phase. As a non-limiting example, the component in which the working fluid 10 circulates, or is intended to circulate, during the cooling phase and/or the heating phase is a heat exchanger.

According to the embodiment, the compound 12 is organic or inorganic.

Preferably, the reactive working fluid 10 according to the invention does not undergo, and is preferably not capable of, Van der Waals bonds formation/breakage between monomers 11 and/or dimers 12. More preferably, monomers 11 do not undergo association, and are preferably not capable of associating, through Van der Waals bonds formation, in one or more dimers 12 and/or dimers 12 do not undergo dissociation, and are preferably not capable of dissociating, through Van der Waals bonds breakage, in two or more monomers 11. The reactive working fluid 10 according to the invention may not undergo, and may not be capable of, Van der Waals bonds formation/breakage between two or more monomers 11 and/or between two or more dimers 12.

The compound (dimer) 12 is of formula Rᵢ-X-X-Rᵢ. The monomer is of formula Rᵢ-X^{•}. Rᵢ is/are substituent(s) bonded to each atom X, i being equal to 1, 2, 3, 4, 5 or 6, and each Rᵢ is different from X. Each Rᵢ and each X are single atom. Each monomer 11 and dimer 12 have a number j of substituent(s) Rᵢ bonded to each atom X. J is comprised between 1 and 6. Each substituent Rᵢ and each X are selected from F, Cl, Br, I, O, S, B, N, P and C. Each Rᵢ is an atom at its lowest valence state.

During at least one phase of each thermodynamic cycle (that is one or two phase), the dimers Rᵢ-X-X-Rᵢ of the working fluid 10 reversibly dissociates, partly or in their entirety, into two monomers Rᵢ-X^{•} of the working fluid 10 and during at least one other phase of each thermodynamic cycle (that is one or two other phases), two monomers Rᵢ-X^{•} of the working fluid 10 reversibly associates, partly or in their entirety, into one dimer Rᵢ-X-X-Rᵢ of the working fluid 10 as follows: Rᵢ-X-X-Rᵢ 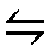 2(Rᵢ-X^{•}).

According to the invention:
- Rᵢ is/are substituent(s) bonded to each atom X, i being equal to 1, 2, 3, 4, 5 or 6,
- each Rᵢ and X are selected from F, Cl, Br, I, O, S, B, N, P and C,
- each Rᵢ is different from X,
- each Rᵢ is an atom at its lowest valence state,
- j is the number of substituent(s) Rᵢ bonded to each atom X, j being comprised between 1 and 6.

According to the invention, the monomer 11/dimer 12 couple is selected from the list of formulae 1 to 23 previously described. In the present description, the set or the group of monomer 11/dimer 12 couples corresponding or matching one formula of the list is called a family of monomer 11/dimer 12 couples. Therefore, the invention comprises 23 families of monomer 11/dimer 12 couples, each family being defined by one of the formulae 1 to 23.

According to a non-limiting embodiment, in order to simplify calculations and the description of the invention, the working fluid 10 consists in a single monomer 11/dimer 12 couple. However, the invention is not limited to a working fluid 10 consisting in a single monomer 11/dimer 12 couple:
- the working fluid 10 may comprise a mixture of monomer 11/dimer 12 couple according to the invention, and/or
- the working fluid 10 may comprise mostly monomer 11/dimer 12 couple according to the invention, typically (in mass percentage) 70% or more, more preferably 80% or more, even more preferably 90% or more and in preferred manner 95% or more, of monomer 11/dimer 12 couple according to the invention and 30% or less, preferably 20% or less, even more preferably 10% or less and in preferred manner 5% or less, respectively, of inert additive.

According to the non-limiting embodiment, in order to simplify calculations and the description of the invention, each monomer 11 and each dimer 12, comprises up to three different atoms, that is:
- for j comprises between 1 to 6, each substituents Rᵢ of each monomer 11 and each dimer 12 are identical, that is each monomer 11 and each dimer 12 of the working fluid 10 comprises two different atoms (X and Rᵢ) and all the substituents Rᵢ are identical (consist in one and the same atom), or
- for j≥2, each monomer 11 and each dimer 12 of the working fluid 10 comprises three different atoms (one atom for X and two different atoms for Rᵢ) and the substituent Rᵢ of each monomer 11 and each dimer 12 consist in two different atoms (that is one Rᵢ is different from one or several other Rᵢ and one or several Rᵢ may be identical to one or several other Rᵢ).

According to the non-limiting embodiment, the 23 families comprise 492 monomer 11/dimer 12 couples.

At last, still for the sake to simplify calculations and the description of the invention, the monomer 11/dimer 12 couples comprising Iodine (I) are not considered in the non-limiting embodiment.

Thus, from this further limitation, the 23 families comprise 262 monomer 11/dimer 12 couples.

According to a first improvement of the non-limiting embodiment, and still for the sake to simplify calculations and the description of the invention, only the monomer 11/dimer 12 couples being stable have been considered.

By "stable", it is understood: the dimers 12 and the monomers 11 do not evolve or degenerate into molecular structures other than the dimers 12 and the monomers 11. Also, the covalent bonds linking the central atom(s) X to the peripheral atom(s) Rᵢ do not break.

To that end, a first selection criterion applied to select, among the 492 monomer 11/dimer 12 couples, the monomer 11/dimer 12 couples considered as stable according to the non-limiting embodiment.

Among the 492 monomer 11/dimer 12 couples, hundred-one monomer 11/dimer 12 couples are considered stable according to the first criterion.

The hundred-one monomer 11/dimer 12 stable couples are listed in table 1. The hundred-one couples are numbered I to CI. For each of the hundred-one monomer 11/dimer 12 couples, the chemical structure, the family or formula, the valence, the standard enthalpy of reaction Δ_{R}H°_{298K} and the standard entropy of reaction Δ_{R}S°_{298K} are reported in table 1. The Simplified Molecular Input Line Entry Specification, said SMILES, of the hundred-one couples the monomer 11 and of the dimer 12 are reported in table 2.

**Table 1**

| Couples number | Chemical structure (RiXXRi) | Family-Formula | Valence | Δ_{R}H°_{298K} | Δ_{R}S°_{298K} |
|---|---|---|---|---|---|
| I | FOOF | 1 | 2 | 193.4 | 1.433×10⁻¹ |
| II | ClOOCl | 1 | 2 | 82 | 1.389×10⁻¹ |
| III | BrOOBr | 1 | 2 | 108.1 | 1.373×10⁻¹ |
| IV | FSSF | 1 | 2 | 326.8 | 1.42×10⁻¹ |
| V | BrSSBr | 1 | 2 | 267.5 | 1.363×10⁻¹ |
| VI | FFBBFF | 2 | 3 | 439.6 | 1.67×10⁻¹ |
| VII | ClFBBFCl | 2 | 3 | 425.8 | 1.67×10⁻¹ |
| VIII | BrFBBFBr | 2 | 3 | 418.8 | 1.7×10⁻¹ |
| IX | ClClBClCl | 2 | 3 | 426.4 | 1.59×10⁻¹ |
| X | BrClBBClBr | 2 | 3 | 427.3 | 1.72×10⁻¹ |
| XI | BrBrBBBrBr | 2 | 3 | 425.6 | 1.68×10⁻¹ |
| XII | FFPPFF | 2 | 3 | 180.8 | 1.752×10⁻¹ |
| XIII | FClPPClF | 2 | 3 | 192.9 | 1.781×10⁻¹ |
| XIV | FBrPPBrF | 2 | 3 | 197 | 1.785×10⁻¹ |
| XV | ClClPPClCl | 2 | 3 | 204.2 | 1.811×10⁻¹ |
| XVI | ClBrPPBrCl | 2 | 3 | 208.3 | 1.808×10⁻¹ |
| XVII | BrBrPPBrBr | 2 | 3 | 212.3 | 1.814×10⁻¹ |
| XVIII | FFNNFF | 2 | 3 | 92.7 | 1.933×10⁻¹ |
| XIX | FClNNClF | 2 | 3 | 119.9 | 1.963×10⁻¹ |
| XX | FBrNNBrF | 2 | 3 | 145 | 1.954×10⁻¹ |
| XXI | ClClNNClCl | 2 | 3 | 123.6 | 1.928×10⁻¹ |
| XXII | ClBrNNCrCl | 2 | 3 | 143.6 | 1.895×10⁻¹ |
| XXIII | BrBrNNBrBr | 2 | 3 | 156.1 | 1.871×10⁻¹ |
| XXIV | FFBrBrFF | 2 | 3 | 16.8 | 1.731×10⁻¹ |
| XXV | ClFBrBrFCl | 2 | 3 | - | 1.76×10⁻¹ |
| XXVI | OBBO | 3 | 3 | 487.7 | 2.08×10⁻¹ |
| XXVII | SBBS | 3 | 3 | 491.3 | 2.07×10⁻¹ |
| XXVIII | OPPO | 3 | 3 | 120.5 | 1.054×10⁻¹ |
| XXIX | ONNO | 3 | 3 | - | 1.23×10⁻¹ |
| XXX | SNNS | 3 | 3 | 164.7 | 2.007×10⁻¹ |
| XXXI | FFONNOFF | 4 | 3 | 53.7 | 1.929×10⁻¹ |
| XXXII | ClClONNOClCl | 4 | 3 | 57.7 | 2.187×10⁻¹ |
| XXXIII | BrBrONNOBrBr | 4 | 3 | 34 | 2.199×10⁻¹ |
| XXXIV | SONNOS | 5 | 3 | 43.6 | 1.758×10⁻¹ |
| XXXV | FFFSSFFF | 6 | 4 | 145.9 | 2.045×10⁻¹ |
| XXXVI | FFClSSClFF | 6 | 4 | 136.6 | 2.003×10⁻¹ |
| XXXVII | FFFCCFFF | 6 | 4 | 416.7 | 1.98×10⁻¹ |
| XXXVIII | ClFFCCFFCl | 6 | 4 | 386.5 | 2.03×10⁻¹ |
| XXXIX | BrFFCCFFBr | 6 | 4 | 381.4 | 2.04×10⁻¹ |
| XL | ClClFCCFClCl | 6 | 4 | 351.9 | 2.09×10⁻¹ |
| XLI | BrBrFCCFBrBr | 6 | 4 | 351.3 | 2.1×10⁻¹ |
| XLII | ClClClCCClClCl | 6 | 4 | 312 | 2.16×10⁻¹ |
| XLIII | BrClClCCClClBr | 6 | 4 | 312.1 | 2.16×10⁻¹ |
| XLIV | BrBrClCCClBrBr | 6 | 4 | 311.3 | 2.16×10⁻¹ |
| XLV | BrBrBrCCBrBrBr | 6 | 4 | 308.1 | 2.17×10⁻¹ |
| XLVI | FOCCOF | 7 | 4 | 362,3 | 1.82×10⁻¹ |
| XLVII | ClOCCOCl | 7 | 4 | 292,8 | 1.88×10⁻¹ |
| XLVIII | ClSCCSCl | 7 | 4 | 320,8 | 1.82×10⁻¹ |
| XLIX | FSCCSF | 7 | 4 | 367,4 | 1.85×10⁻¹ |
| L | BrSCCSBr | 7 | 4 | 316,6 | 1.84×10⁻¹ |
| LI | BrOCCOBr | 7 | 4 | 248.2 | 2.066×10⁻¹ |
| LII | FOSSOF | 7 | 4 | 55.2 | 1.685×10⁻¹ |
| LIII | ClOSSOCl | 7 | 4 | 54.6 | 1.710×10⁻¹ |
| LIV | BrOSSOBr | 7 | 4 | 57.1 | 1.719×10⁻¹ |
| LV | NSSN | 8 | 4 | 29.3 | 1.267×10⁻¹ |
| LVI | BCCB | 8 | 4 | 813.6 | 1.25×10⁻¹ |
| LVII | PCCP | 8 | 4 | 599.6 | 1.62×10⁻¹ |
| LVIII | NCCN | 8 | 4 | 579.4 | 1.6×10⁻¹ |
| LIX | FFFFPPFFFF | 9 | 5 | 270.9 | 1.939×10⁻¹ |
| LX | FFFClPPClFFF | 9 | 5 | 267.3 | 1.961×10⁻¹ |
| LXI | FFFBrPPBrFFF | 9 | 5 | 264.8 | 2.036×10⁻¹ |
| LXII | FFClClPPClClFF | 9 | 5 | 262.3 | 1.943×10⁻¹ |
| LXIII | FFBrBrPPBrBrFF | 9 | 5 | 254 | 1.951×10⁻¹ |
| LXIV | ClClClClPPClClClCl | 9 | 5 | 114.5 | 2.204×10⁻¹ |
| LXV | ClClOPPOClCl | 10 | 5 | 263.4 | 1.907×10⁻¹ |
| LXVI | BrBrOPPOBrBr | 10 | 5 | 238.2 | 1.950×10⁻¹ |
| LXVII | FFSPPSFF | 10 | 5 | 271 | 1.845×10⁻¹ |
| LXVIII | ClClSPPSClCl | 10 | 5 | 225.5 | 1.962×10⁻¹ |
| LXIX | BrBrSPPSBrBr | 10 | 5 | 205.2 | 1.976×10⁻¹ |
| LXX | FFOPPOFF | 10 | 5 | 310.2 | 1.82×10⁻¹ |
| LXXI | PFPPFP | 11 | 5 | 84.1 | 1.728×10⁻¹ |
| LXXII | PCIPPCIP | 11 | 5 | 56.2 | 1.716×10⁻¹ |
| LXXIII | PBrPPBrP | 11 | 5 | 45.8 | 1.707×10⁻¹ |
| LXXIV | FNPPNF | 11 | 5 | 46.3 | 1.658×10⁻¹ |
| LXXV | ClNPPNCl | 11 | 5 | 32.7 | 1.711×10⁻¹ |
| LXXVI | BrNPPNBr | 11 | 5 | 27.5 | 1.700×10⁻¹ |
| LXXVII | OOPPOO | 12 | 5 | 200.1 | 1.663×10⁻¹ |
| LXXVIII | SOPPOS | 12 | 5 | 180.2 | 1.672×10⁻¹ |
| LXXIX | SSPPSS | 12 | 5 | 167.3 | 1.651×10⁻¹ |
| LXXX | FFFFFSSFFFFF | 13 | 6 | 195.4 | 2.268×10⁻¹ |
| LXXXI | ClFFFFSSFFFFC | 13 | 6 | 118.3 | 2.339×10⁻¹ |
| LXXXII | BrFFFFSSFFFFBr | 13 | 6 | 101.5 | 2.545×10⁻¹ |
| LXXXIII | ClClFFFSSFFFClCl | 13 | 6 | 56.7 | 2.595×10⁻¹ |
| LXXXIV | FFFOSSOFFF | 14 | 6 | 92.7 | 2.053×10⁻¹ |
| LXXXV | SFFFSSFFFS | 14 | 6 | 80.8 | 1.976×10⁻¹ |
| LXXXVI | SClFFSSFFClS | 14 | 6 | 72.2 | 2.027×10⁻¹ |
| LXXXVII | SBrFFSSFFBrS | 14 | 6 | 67.6 | 2.027×10⁻¹ |
| LXXXVIII | ClClNSSNClCl | 15 | 6 | 16.3 | 1.556×10⁻¹ |
| LXXXIX | FFPSSPFF | 15 | 6 | - | 1.6×10⁻¹ |
| XC | FOOSSOOF | 16 | 6 | 175.8 | 1.859×10⁻¹ |
| XCI | ClOOSSOOCl | 16 | 6 | 140.7 | 1.891×10⁻¹ |
| XCII | BrOOSSOOBr | 16 | 6 | 119.6 | 1.957×10⁻¹ |
| XCIII | FSOSSOSF | 16 | 6 | 134.6 | 1.864×10⁻¹ |
| XCIV | ClSOSSOSCl | 16 | 6 | 105.5 | 1.859×10⁻¹ |
| XCV | BrSOSSOSBr | 16 | 6 | 97.2 | 1.832×10⁻¹ |
| XCVI | SSFSSFSS | 16 | 6 | 67.5 | 1.779×10⁻¹ |
| XCVII | SSClSSClSS | 16 | 6 | 59.4 | 1.735×10⁻¹ |
| XCVIII | SSBrSSBrSS | 16 | 6 | 77.2 | 1.680×10⁻¹ |
| XCIX | SNSSNS | 17 | 6 | 29.5 | 1.678×10⁻¹ |
| C | OOOClClOOO | 20 | 7 | 40.7 | 1.708×10⁻¹ |
| CI | OOOBrBrOOO | 20 | 7 | - | 1.52×10⁻¹ |

**Table 2**

| Couples number | Monomer SMILES | Dimer SMILES |
|---|---|---|
| I | [O](F) | O(F)O(F) |
| II | [O](Cl) | O(Cl)O(Cl) |
| III | [O](Br) | O(Br)O(Br) |
| IV | [S](F) | S(F)S(F) |
| V | [S](Br) | S(Br)S(Br) |
| VI | [B](F)(F) | B(F)(F)B(F)(F) |
| VII | [B](F)(Cl) | B(F)(Cl)B(F)(Cl) |
| VIII | [B](F)(Br) | B(F)(Br)B(F)(Br) |
| IX | [B](Cl)(Cl) | B(Cl)(Cl)B(Cl)(Cl) |
| X | [B](Cl)(Br) | B(Cl)(Br)B(Cl)(Br) |
| XI | [B](Br)(Br) | B(Br)(Br)B(Br)(Br) |
| XII | [P](F)(F) | P(F)(F)P(F)(F) |
| XIII | [P](F)(Cl) | P(F)(Cl)P(F)(Cl) |
| XIV | [P](F)(Br) | P(F)(Br)P(F)(Br) |
| XV | [P](Cl)(Cl) | P(Cl)(Cl)P(Cl)(Cl) |
| XVI | [P](Cl)(Br) | P(Cl)(Br)P(Cl)(Br) |
| XVII | [P](Br)(Br) | P(Br)(Br)P(Br)(Br) |
| XVIII | [N](F)(F) | N(F)(F)N(F)(F) |
| XIX | [N](F)(Cl) | N(F)(Cl)N(F)(Cl) |
| XX | [N](F)(Br) | N(F)(Br)N(F)(Br) |
| XXI | [N](Cl)(Cl) | N(Cl)(Cl)N(Cl)(Cl) |
| XXII | [N](Cl)(Br) | N(Cl)(Br)N(Cl)(Br) |
| XXIII | [N](Br)(Br) | N(Br)(Br)N(Br)(Br) |
| XXIV | [Br](F)(F) | Br(F)(F)Br(F)(F) |
| XXV | [Br](F)(Cl) | Br(F)(Cl)Br(F)(Cl) |
| XXVI | [B](=O) | B(=O)B(=O) |
| XXVII | [B](=S) | B(=S)B(=S) |
| XXVIII | [P](=O) | P(=O)P(=O) |
| XXIX | [N](=O) | N(=O)N(=O) |
| XXX | [N](=S) | N(=S)N(=S) |
| XXXI | [N+]([O-])(F)(F) | [N+]([O-])(F)(F)[N+]([O-])(F)(F) |
| XXXII | [N+]([O-])(Cl)(Cl) | [N+]([O-])(Cl)(Cl)[N+]([O-])(Cl)(Cl) |
| XXXIII | [N+]([O-])(Br)(Br) | [N+]([O-])(Br)(Br)[N+]([O-])(Br)(Br) |
| XXXIV | [N+]([O-])(=S) | [N+]([O-])(=S)[N+]([O-])(=S) |
| XXXV | [S](F)(F)(F) | S(F)(F)(F)S(F)(F)(F) |
| XXXVI | [S](F)(F)(Cl) | S(F)(F)(Cl)S(F)(F)(Cl) |
| XXXVII | [C](F)(F)(F) | C(F)(F)(F)C(F)(F)(F) |
| XXXVIII | [C](F)(F)(Cl) | C(F)(F)(Cl)C(F)(F)(Cl) |
| XXXIX | [C](F)(F)(Br) | C(F)(F)(Br)C(F)(F)(Br) |
| XL | [C](F)(Cl)(Cl) | C(F)(Cl)(Cl)C(F)(Cl)(Cl) |
| XLI | [C](F)(Br)(Br) | C(F)(Br)(Br)C(F)(Br)(Br) |
| XLII | [C](Cl)(Cl)(Cl) | C(Cl)(Cl)(Cl)C(Cl)(Cl)(Cl) |
| XLIII | [C](Cl)(Cl)(Br) | C(Cl)(Cl)(Br)C(Cl)(Cl)(Br) |
| XLIV | [C](Cl)(Br)(Br) | C(Cl)(Br)(Br)C(Cl)(Br)(Br) |
| XLV | [C](Br)(Brl)(Br) | C(Br)(Br)(Br)C(Br)(Br)(Br) |
| XLVI | [C](=O)(F) | C(=O)(F)C(=O)(F) |
| XLVII | [C](=O)(Cl) | C(=O)(Cl)C(=O)(Cl) |
| XLVIII | [C](=S)(Cl) | C(=S)(Cl)C(=S)(Cl) |
| XLIX | [C](=S)(F) | C(=S)(F)C(=S)(F) |
| L | [C](=S)(Br) | C(=S)(Br)C(=S)(Br) |
| LI | [C](=O)(Br) | C(=O)(Br)C(=O)(Br) |
| LII | [S](=O)(F) | S(=O)(F)S(=O)(F) |
| LIII | [S](=O)(Cl) | S(=O)(Cl)S(=O)(Cl) |
| LIV | [S](=O)(Br) | S(=O)(Br)S(=O)(Br) |
| LV | [S](#N) | S(#N)S(#N) |
| LVI | [C](#B) | C(#B)C(#B) |
| LVII | [C](#P) | C(#P)C(#P) |
| LVIII | [C](#N) | C(#N)C(#N) |
| LIX | [P](F)(F)(F)(F) | P(F)(F)(F)(F)P(F)(F)(F)(F) |
| LX | [P](F)(F)(F)(Cl) | P(F)(F)(F)(Cl)P(F)(F)(F)(Cl) |
| LXI | [P](F)(F)(F)(Br) | P(F)(F)(F)(Br)P(F)(F)(F)(Br) |
| LXII | [P](F)(F)(Cl)(Cl) | P(F)(F)(Cl)(Cl)P(F)(F)(Cl)(Cl) |
| LXIII | [P](F)(F)(Br)(Br) | P(F)(F)(Br)(Br)P(F)(F)(Br)(Br) |
| LXIV | [P](Cl)(Cl)(Cl)(Cl) | P(Cl)(Cl)(Cl)(Cl)P(Cl)(Cl)(Cl)(Cl) |
| LXV | [P](=O)(Cl)(Cl) | P(=O)(Cl)(Cl)P(=O)(Cl)(Cl) |
| LXVI | [P](=O)(Br)(Br) | P(=O)(Br)(Br)P(=O)(Br)(Br) |
| LXVII | [P](=S)(F)(F) | P(=S)(F)(F)P(=S)(F)(F) |
| LXVIII | [P](=S)(Cl)(Cl) | P(=S)(Cl)(Cl)P(=S)(Cl)(Cl) |
| LXIX | [P](=S)(Br)(Br) | P(=S)(Br)(Br)P(=S)(Br)(Br) |
| LXX | [P](=O)(F)(F) | P(=O)(F)(F)P(=O)(F)(F) |
| LXXI | [P](#P)(F) | P(#P)(F)P(#P)(F) |
| LXXII | [P](#P)(Cl) | P(#P)(Cl)P(#P)(Cl) |
| LXXIII | [P](#P)(Br) | P(#P)(Br)P(#P)(Br) |
| LXXIV | [P](#N)(F) | P(#N)(F)P(#N)(F) |
| LXXV | [P](#N)(Cl) | P(#N)(Cl)P(#N)(Cl) |
| LXXVI | [P](#N)(Br) | P(#N)(Br)P(#N)(Br) |
| LXXVII | [P](=O)(=O) | P(=O)(=O)P(=O)(=O) |
| LXXVIII | [P](=O)(=S) | P(=O)(=S)P(=O)(=S) |
| LXXIX | [P](=S)(=S) | P(=S)(=S)P(=S)(=S) |
| LXXX | [S](F)(F)(F)(F)(F) | S(F)(F)(F)(F)(F)S(F)(F)(F)(F)(F) |
| LXXXI | [S](F)(F)(F)(F)(Cl) | S(F)(F)(F)(F)(Cl)S(F)(F)(F)(F)(Cl) |
| LXXXII | [S](F)(F)(F)(F)(Br) | S(F)(F)(F)(F)(Br)S(F)(F)(F)(F)(Br) |
| LXXXIII | [S](F)(F)(F)(Cl)(Cl) | S(F)(F)(F)(Cl)(Cl)S(F)(F)(F)(Cl)(Cl) |
| LXXXIV | [S](=O)(F)(F)(F) | S(=O)(F)(F)(F)S(=O)(F)(F)(F) |
| LXXXV | [S](=S)(F)(F)(F) | S(=S)(F)(F)(F)S(=S)(F)(F)(F) |
| LXXXVI | [S](=S)(F)(F)(CI) | S(=S)(F)(F)(Cl)S(=S)(F)(F)(Cl) |
| LXXXVII | [S](=S)(F)(F)(Br) | S(=S)(F)(F)(Br)S(=S)(F)(F)(Br) |
| LXXXVIII | [S](#N)(Cl)(Cl) | S(#N)(Cl)(Cl)S(#N)(Cl)(Cl) |
| LXXXIX | [S](#P)(F)(F) | S(#P)(F)(F)S(#P)(F)(F) |
| XC | [S](=O)(=O)(F) | S(=O)(=O)(F)S(=O)(=O)(F) |
| XCI | [S](=O)(=O)(Cl) | S(=O)(=O)(Cl)S(=O)(=O)(Cl) |
| XCII | [S](=O)(=O)(Br) | S(=O)(=O)(Br)S(=O)(=O)(Br) |
| XCIII | [S](=O)(=S)(F) | S(=O)(=S)(F)S(=O)(=S)(F) |
| XCIV | [S](=O)(=S)(Cl) | S(=O)(=S)(Cl)S(=O)(=S)(Cl) |
| XCV | [S](=O)(=S)(Br) | S(=O)(=S)(Br)S(=O)(=S)(Br) |
| XCVI | [S](=S)(=S)(F) | S(=S)(=S)(F)S(=S)(=S)(F) |
| XCVII | [S](=S)(=S)(Cl) | S(=S)(=S)(Cl)S(=S)(=S)(Cl) |
| XCVIII | [S](=S)(=S)(Br) | S(=S)(=S)(Br)S(=S)(=S)(Br) |
| XCIX | [S](#N)(=S) | S(#N)(=S)S(#N)(=S) |
| C | [Cl](=O)(=O)(=O) | Cl(=O)(=O)(=O)Cl(=O)(=O)(=O) |
| CI | [Br](=O)(=O)(=O) | Br(=O)(=O)(=O)Br(=O)(=O)(=O) |

According to a second improvement of the non-limiting embodiment, and still for the sake of simplifying the calculations and the description of the invention, only monomer 11/dimer 12 couples having noteworthy kinetics features (association/dissociation being sufficiently fast and reversible) are addressed.

In others words, according to the second improvement, only the monomer 11/dimer 12 couples being stable and exhibiting highly fast and reversible monomer 11 association/dimer 12 dissociation are considered.

To that end, according to the second improvement, a second criterion is applied to select "highly fast and reversible association/dissociation".

The second criterion is based on the backward constant rate (k_{b}) (said kₐ for association of dimers 11 into monomers 12) and the forward or reverse constant rate (kf) (said k_{d} for dissociation of monomers 12 into dimers 11). Any measure/value related to, derived from or function of kₐ and/or k_{d} may be used.

According to the second improvement, the dissociation time (t_{d}) and the association time (tₐ) have been considered to select the monomer 11/dimer 12 couples. The dissociation time t_{d} may be expressed as being equal to 1/k_{d} and the association time tₐ may be expressed as being equal to 1/(kₐ.C_{M}) where C_{M} is the concentration of the monomers at the considered temperature and pressure. The second criterion according to the second improvement is: the dissociation time t_{d} and the association time tₐ are each lower than or equal to 10 milliseconds (ms).

Preferably, the second improvement is taken in combination with the first improvement of the non-limiting embodiment. In others words, only the monomer 11/dimer 12 couples being stable and exhibiting noteworthy thermodynamics features are considered. Thus, the first and second criteria are applied/combined.

According to the combination of the first and the second improvements of the non-limiting embodiment, among the hundred-one stable couples, seventy-two monomer 11/dimer 12 couples being stable and having noteworthy kinetics features (association/dissociation being sufficiently fast and reversible) have been selected (by applying both the first and the second criterion). The seventy-two couples are reported in table 3. For each of the seventy-two monomer 11/dimer 12 couples, the couple number (provided in table 1), the family or formula, the forward constant rate (k_{d}), in s⁻¹, the backward constant rate (kₐ), in cm³.mol⁻¹.s⁻¹, the standard enthalpy of reaction Δ_{R}H°_{298K} and the standard entropy of reaction Δ_{R}S°_{298K} are reported in table 3.

**Table 3**

| Couples number | k_{d} | kₐ | Δ_{R}H°_{298K} | Δ_{R}S°_{298K} |
|---|---|---|---|---|
| I | 7.9×10⁵ | 2.7×10¹³ | 193.4 | 0.143 |
| II | 5.2×10¹¹ | 4.6×10¹³ | 82.1 | 0.139 |
| III | 2.3×10¹⁰ | 5.6×10¹³ | 108.1 | 0.137 |
| V | 1.1×10² | 6.3×10¹³ | 267.5 | 0.136 |
| XII | 3.6×10⁶ | 5.8×10¹¹ | 180.8 | 0.175 |
| XIII | 8.4×10⁵ | 4.1×10¹¹ | 192.9 | 0.178 |
| XIV | 5.1×10⁵ | 4.0×10¹¹ | 197.0 | 0.178 |
| XV | 2.2×10⁵ | 2.9×10¹¹ | 204.2 | 0.181 |
| XVI | 1.3×10⁵ | 3.0 10¹¹ | 208.3 | 0.181 |
| XVII | 8.2×10⁴ | 2.8×10¹¹ | 212.3 | 0.181 |
| XVIII | 1.4×10¹¹ | 6.7×10¹⁰ | 92.7 | 0.193 |
| XIX | 5.4×10⁹ | 4.6×10¹⁰ | 119.9 | 0.196 |
| XX | 2.7×10⁸ | 5.2×10¹⁰ | 145.0 | 0.195 |
| XXI | 3.5×10⁹ | 7.0×10¹⁰ | 123.7 | 0.193 |
| XXII | 3.2×10⁸ | 1.0×10¹¹ | 143.6 | 0.190 |
| XXIII | 7.0×10⁷ | 1.4×10¹¹ | 156.1 | 0.187 |
| XXIV | 1.3×10¹⁵ | 7.5×10¹¹ | 16.8 | 0.173 |
| XXV | 1.6 ×10¹⁶ | 5.5×10¹¹ | -3.7 | 0.176 |
| XXVIII | 5.1×10⁹ | 2.6×10¹⁵ | 120.5 | 0.105 |
| XXIX | 1.0×10¹⁷ | 3.3×10¹⁴ | -19.3 | 0.123 |
| XXX | 2.5×10⁷ | 2.7×10¹⁰ | 164.7 | 0.201 |
| XXXI | 1.6×10¹³ | 7.0×10¹⁰ | 53.7 | 0.193 |
| XXXII | 9.7×10¹² | 3.1×10⁹ | 57.7 | 0.219 |
| XXXIII | 1.7×10¹⁴ | 2.7×10⁹ | 34.0 | 0.220 |
| XXXIV | 5.3×10¹³ | 5.5×10¹¹ | 43.6 | 0.176 |
| XXXV | 2.4×10⁸ | 1.7×10¹⁰ | 145.9 | 0.204 |
| XXXVI | 7.3×10⁸ | 2.9×10¹⁰ | 136.7 | 0.200 |
| LI | 1.1×10³ | 1.3×10¹⁰ | 248.2 | 0.207 |
| LII | 1.3×10¹³ | 1.3×10¹² | 55.2 | 0.169 |
| LIII | 1.4×10¹³ | 9.7×10¹¹ | 54.6 | 0.171 |
| LIV | 1.0×10¹³ | 8.8×10¹¹ | 57.1 | 0.172 |
| LV | 2.9×10¹⁴ | 2.0×10¹⁴ | 29.3 | 0.127 |
| LX | 1.1×10² | 4.7×10¹⁰ | 267.3 | 0.196 |
| LXI | 1.5×10² | 1.9×10¹⁰ | 264.8 | 0.204 |
| LXII | 2.0×10² | 5.9×10¹⁰ | 262.3 | 0.194 |
| LXIII | 5.4×10² | 5.3×10¹⁰ | 254.0 | 0.195 |
| LXIV | 1.0×10¹⁰ | 2.5×10⁹ | 114.5 | 0.220 |
| LXV | 1.7×10² | 9.0×10¹⁰ | 263.4 | 0.191 |
| LXVI | 3.6×10³ | 5.4×10¹⁰ | 238.2 | 0.195 |
| LXVIII | 1.7×10⁴ | 4.7×10¹⁰ | 225.5 | 0.196 |
| LXIX | 1.9×10⁵ | 3.9×10¹⁰ | 205.2 | 0.198 |
| LXXI | 4.0×10¹¹ | 7.8×10¹¹ | 84.1 | 0.173 |
| LXXII | 1.2×10¹³ | 9.1×10¹¹ | 56.2 | 0.172 |
| LXXIII | 4.0×10¹³ | 1.0×10¹² | 45.8 | 0.171 |
| LXXIV | 3.8×10¹³ | 1.8×10¹² | 46.4 | 0.166 |
| LXXV | 1.9×10¹⁴ | 9.5×10¹¹ | 32.7 | 0.171 |
| LXXVI | 3.7×10¹⁴ | 1.1×10¹² | 27.5 | 0.170 |
| LXXVII | 3.5×10⁵ | 1.7×10¹² | 200.1 | 0.166 |
| LXXVIII | 3.9×10⁶ | 1.5×10¹² | 180.2 | 0.167 |
| LXXIX | 1.8×10⁷ | 2.0×10¹² | 167.3 | 0.165 |
| LXXX | 6.2×10⁵ | 1.2×10⁹ | 195.4 | 0.227 |
| LXXXI | 6.6×10⁹ | 5.0×10⁸ | 118.3 | 0.234 |
| LXXXII | 5.0×10¹⁰ | 4.2×10⁷ | 101.5 | 0.254 |
| LXXXIII | 1.1×10¹³ | 2.3×10⁷ | 56.7 | 0.260 |
| LXXXIV | 1.4×10¹¹ | 1.6×10¹⁰ | 92.7 | 0.205 |
| LXXXV | 6.0×10¹¹ | 4.0×10¹⁰ | 80.8 | 0.198 |
| LXXXVI | 1.7×10¹² | 2.2×10¹⁰ | 72.2 | 0.203 |
| LXXXVII | 2.9×10¹² | 2.2×10¹⁰ | 67.6 | 0.203 |
| LXXXVIII | 1.4×10¹⁵ | 6.2×10¹² | 16.3 | 0.156 |
| LXXXIX | 4.5×10¹⁶ | 3.6×10¹² | -12.5 | 0.160 |
| XC | 6.6×10⁶ | 1.6×10¹¹ | 175.8 | 0.186 |
| XCI | 4.5×10⁸ | 1.1×10¹¹ | 140.7 | 0.189 |
| XCII | 5.7×10⁹ | 5.0×10¹⁰ | 119.6 | 0.196 |
| XCIII | 9.3×10⁸ | 1.5×10¹¹ | 134.6 | 0.186 |
| XCIV | 3.1×10¹⁰ | 1.6×10¹¹ | 105.5 | 0.186 |
| XCV | 8.3×10¹⁰ | 2.2×10¹¹ | 97.3 | 0.183 |
| XCVI | 3.0×10¹² | 4.2×10¹¹ | 67.5 | 0.178 |
| XCVII | 7.9×10¹² | 7.2×10¹¹ | 59.4 | 0.174 |
| XCVIII | 9.2×10¹¹ | 1.4×10¹² | 77.3 | 0.168 |
| XCIX | 2.9×10¹⁴ | 1.4×10¹² | 29.5 | 0.168 |
| C | 7.4×10¹³ | 1.0×10¹² | 40.7 | 0.171 |
| CI | 4.7×10¹⁷ | 9.9×10¹² | -31.9 | 0.152 |

According to a third improvement of the non-limiting embodiment, and still for the sake of simplifying the calculations and the description of the invention, only monomer 11/dimer 12 couples having noteworthy kinetics features (association/dissociation being sufficiently fast and reversible) are addressed.

Preferably, but not necessarily, the third improvement may be considered as an alternative to the second improvement.

In others words, according to the third improvement, only the monomer 11/dimer 12 couples exhibiting highly fast and reversible monomer 11 association/dimer 12 dissociation are considered.

To that end, according to a third improvement, a third criterion is applied to select "highly fast and reversible association/dissociation".

The third criterion is: a reaction (that is the monomer 11/dimer 12 association/dissociation) relaxation time, τ, lower than or equal to 0.1 ms. The monomer 11 and/or the dimer 12 having a relaxation time τ according to the third criterion are considered to exhibit fast association and dissociation during the phases of a thermodynamic cycle.

The relaxation time is function of and/or is calculated from the forward constant rate (k_{d}) and the backward constant rate (kₐ).

The equilibrium constant, K_{eq}, may be expressed: K_{eq}(T) = k_{d}/kₐ.

As non-limiting example, for the dissociation reaction, Rᵢ-X-X-Rᵢ → 2(Rᵢ-X^{•}), the activation energy can be assumed to be equal to the standard enthalpy of reaction of the system. As non-limiting embodiment, the rate constant of the dissociation reaction (k_{d}) can be calculated with the Arrhenius law, considering a pre-exponential factor being equal, for example, to 1.10¹⁶ s⁻¹. The association (backward) rate constant (kₐ) (in cm³.mol⁻¹.s⁻¹) can be calculated from the equilibrium constant (K_{eq}) and the dissociation rate constant, k_{d}. From kₐ and k_{d}, the relaxation time, τ (in s), of the reaction can be determined and then compared to the residential time of the fluid in the operation units of the considered thermodynamic conversion machine.

The standard enthalpy of reaction (Δ_{R}H°_{298K}) (in kJ/mol) and the standard entropy of reaction (Δ_{R}S°_{298K}) (in kJ/mol/K) associated with the association/dissociation of each monomer 11/dimer 12 couple enable the calculation of the equilibrium constant of the reaction (which is also function of temperature).

The entropy of reaction (Δ_{R}S°_{298K}) (in kJ/mol/K) associated with the association/dissociation of each monomer 11/dimer 12 couple may be related to the enthalpy of reaction (Δ_{R}H°_{298K}) through the standard Gibbs energy of reaction (Δ_{R}G°_{298K}) (in kJ/mol).

Preferably, the third improvement is taken in combination with the first improvement of the non-limiting embodiment. In others words, only the monomer 11/dimer 12 couples being stable and exhibiting noteworthy kinetics features are considered. Thus, the first and third criteria are applied/combined.

According to the combination of the first and the third improvements of the non-limiting embodiment among the hundred-one stable couples, seventy-six monomer 11/dimer 12 couples being stable and having noteworthy kinetics features (association/dissociation being sufficiently fast and reversible) have been selected (by applying both the first and the third criterion). The seventy-six couples are reported in table 4. For each of the seventy-six monomer 11/dimer 12 couples, the couple number (provided in table 1), and the monomer 11/dimer 12 association/dissociation relaxation time, τ, in seconds, are reported in table 4.

| Couples number | Relaxation time τ (in seconds) |
|---|---|
| I | 1.6×10⁻⁸ |
| II | 1.9×10⁻¹² |
| III | 4.0×10⁻¹¹ |
| IV | 4.4×10⁻⁵ |
| V | 8.8×10⁻⁷ |
| XII | 5.6×10⁻⁸ |
| XIII | 1.3×10⁻⁷ |
| XIV | 1.7×10⁻⁷ |
| XV | 3.1×10⁻⁷ |
| XVI | 3.8×10⁻⁷ |
| XVII | 5.0×10⁻⁷ |
| XVIII | 6.9×10⁻¹² |
| XIX | 1.8×10⁻¹⁰ |
| XX | 3.7×10⁻⁹ |
| XXI | 2.9×10⁻¹⁰ |
| XXII | 3.1×10⁻⁹ |
| XXIII | 1.3×10⁻⁸ |
| XXIV | 7.6×10⁻¹⁶ |
| XXV | 6.4×10⁻¹⁷ |
| XXVIII | 2.2×10⁻¹¹ |
| XXIX | 9.8×10⁻¹⁸ |
| XXX | 3.8×10⁻⁸ |
| XXXI | 6.4×10⁻¹⁴ |

**Table 4**

| | |
|---|---|
| XXXII | 1.0×10⁻¹³ |
| XXXIII | 6.0×10⁻¹⁵ |
| XXXIV | 1.9×10⁻¹⁴ |
| XXXV | 4.2×10⁻⁹ |
| XXXVI | 1.4×10⁻⁹ |
| XLVII | 8.9×10⁻⁵ |
| LI | 1.9×10⁻⁵ |
| LII | 7.7×10⁻¹⁴ |
| LIII | 7.1×10⁻¹⁴ |
| LIV | 9.6×10⁻¹⁴ |
| LV | 3.4×10⁻¹⁵ |
| LIX | 3.5×10⁻⁵ |
| LX | 3.2×10⁻⁵ |
| LXI | 4.3×10⁻⁵ |
| LXII | 2.1×10⁻⁵ |
| LXIII | 1.4×10⁻⁵ |
| LXIV | 9.6×10⁻¹¹ |
| LXV | 1.8×10⁻⁵ |
| LXVI | 5.3×10⁻⁶ |
| LXVII | 2.0×10⁻⁵ |
| LXVIII | 2.7×10⁻⁶ |
| LXIX | 9.3×10⁻⁷ |
| LXXI | 2.5×10⁻¹² |
| LXXII | 8.6×10⁻¹⁴ |
| LXXIII | 2.5×10⁻¹⁴ |
| LXXIV | 2.6×10⁻¹⁴ |
| LXXV | 5.1×10⁻¹⁵ |
| LXXVI | 2.7×10⁻¹⁵ |
| LXXVII | 9.5×10⁻⁸ |
| LXXVIII | 3.2×10⁻⁸ |
| LXXIX | 1.4×10⁻⁸ |
| LXXX | 1.5×10⁻⁶ |
| LXXXI | 1.5×10⁻¹⁰ |
| LXXXII | 2.0×10⁻¹¹ |
| LXXXIII | 9.1×10⁻¹⁴ |
| LXXXIV | 6.9×10⁻¹² |
| LXXXV | 1.7×10⁻¹² |
| LXXXVI | 5.9×10⁻¹³ |
| LXXXVII | 3.4×10⁻¹³ |
| LXXXVIII | 7.1×10⁻¹⁶ |
| LXXXIX | 2.2×10⁻¹⁷ |
| XC | 7.8×10⁻⁸ |
| XCI | 2.2×10⁻⁹ |
| XCII | 1.8×10⁻¹⁰ |
| XCIII | 1.1×10⁻⁹ |
| XCIV | 3.2×10⁻¹¹ |
| XCV | 1.2×10⁻¹¹ |
| XCVI | 3.4×10⁻¹³ |
| XCVII | 1.3×10⁻¹³ |
| XCVIII | 1.1×10⁻¹² |
| XCIX | 3.5×10⁻¹⁵ |
| C | 1.3×10⁻¹⁴ |
| CI | 2.2×10⁻¹⁸ |

According to a fourth improvement of the non-limiting embodiment, and still for the sake of simplifying the calculations and the description of the invention, only monomer 11/dimer 12 couples having noteworthy thermodynamics features (the monomers 11/dimers 12 composition changes, in the considered temperature and pressure ranges of the application, in a sufficient amount so that the energy involved/associated in the change is significant) are addressed.

In other words, according to the fourth improvement, only the monomer 11/dimer 12 couples exhibiting "sufficiently high variation of monomers 11/dimers 12 composition" are considered.

To that end, according to the fourth improvement, a fourth criterion is applied to select "sufficiently high variation of monomers 11/dimers 12 composition".

The fourth criterion is based on the variation of the molar fraction molar fraction, said x_{M}, of the monomers 11 and/or on the variation of the molar fraction, said x_{D}, of the dimers 12 of the couples. Preferably, the fourth criterion is based on the variation of: the absolute value of the molar fraction x_{M} of the monomers 11 and/or the absolute value of the molar fraction x_{D} of the dimers 12 of the couples. The fourth criterion is: the variation of the molar fraction x_{M} of the monomers 11 and/or variation of the molar fraction x_{D} of the dimers 12 is higher than or equal to 0.3.

The molar fraction is comprised between 0 and 1. The molar fraction x_{M} of the monomers 11 may increase with the temperature. The molar fraction x_{D} of the dimers 12 may decrease with the temperature. The monomer 11 and/or the dimer 12 having a variation of the molar fraction x_{D}, x_{M} according to the fourth criterion are considered to highly evolve (in quantity: molar concentration or volume...) from monomers 11 to dimers 12, through association, and from dimers 12 to monomers 11, through dissociation (i.e. the couple has a sufficient change in composition of the mixture monomer 11/dimer 12), during the phases of a thermodynamic cycle.

The equilibrium constant enables the determination of the composition of the reactive mixture at a given temperature, that is the molar fraction x_{M} of the monomer 11 and the complementary molar fraction x_{D} of the dimer 12.

Preferably, the fourth improvement is taken in combination with the first improvement of the non-limiting embodiment. In others words, only the monomer 11/dimer 12 couples being stable and exhibiting noteworthy thermodynamics features are considered. Thus, the first and fourth criteria are applied/combined.

According to the combination of the first and the fourth improvement of the non-limiting embodiment, among the hundred-one stable couples, forty-one monomer 11/dimer 12 couples satisfy the third criterion (i.e. the first and fourth criteria). The forty-one monomer 11/dimer 12 couples being stable and having "sufficiently high variation of monomers 11/dimers 12 composition" are listed in table 5. For each of the forty-one monomer 11/dimer 12 couples, the couple number (provided in table 1) and the variation of the absolute value of the molar fraction x_{M} of the monomers 11 are reported in table 5.

**Table 5**

| Couples number | x_{M} variation |
|---|---|
| II | 0.9988 |
| III | 0.9717 |
| XII | 0.5036 |
| XIII | 0.3354 |
| XVIII | 0.9997 |
| XIX | 0.9999 |
| XX | 0.9977 |
| XXI | 0.9998 |
| XXII | 0.9961 |
| XXIII | 0.9769 |
| XXVIII | 0.3310 |
| XXX | 0.9871 |
| XXXI | 0.3183 |
| XXXV | 0.9991 |
| XXXVI | 0.9995 |
| LII | 0.8171 |
| LIII | 0.7655 |
| LIV | 0.8483 |
| LXIV | 1.0000 |
| LXIX | 0.4642 |
| LXXI | 0.9994 |
| LXXII | 0.8207 |
| LXXIV | 0.3411 |
| LXXVIII | 0.3648 |
| LXXIX | 0.5726 |
| LXXX | 0.9779 |
| LXXXI | 1.0000 |
| LXXXII | 0.9981 |
| LXXXIV | 0.9994 |
| LXXXV | 0.9950 |
| LXXXVI | 0.9581 |
| LXXXVII | 0.8926 |
| XC | 0.8067 |
| XCI | 0.9970 |
| XCII | 0.9999 |
| XCIII | 0.9980 |
| XCIV | 0.9999 |
| XCV | 0.9999 |
| XCVI | 0.9744 |
| XCVII | 0.8937 |
| XCVIII | 0.9982 |

All the calculations (kₐ, k_{d}, τ, x_{M} variation, Δ_{R}S°_{298K}, Δ_{R}H°_{298K}) and the chemical structure of the monomer 11/dimer 12 couples have been simulated through a Fortran code specially developed to design these reactions.

The calculations of the thermochemical properties (Δ_{R}H° and Δ_{R}G°) have been made at 298.15 Kelvins (K).

The kinetic constants (kₐ, k_{d}) and the derived relaxation time τ are calculated at 1000 K.

The design of the chemical structure of the monomer 11/dimer 12 couples has been performed with a Fortran code specifically developed to this purpose.

The stability analysis and the calculation of the thermochemical properties (Δ_{R}H°_{298K} and Δ_{R}G°_{298K}), at the basis of kinetics and thermodynamic calculations (x_{M}, x_{D} variation), have been performed with Gaussian09.

According to the detailed embodiment, the reactive working fluid 10 may comprise any of the monomer 11/dimer 12 couple(s) described and listed above.

The improvements may be considered independently from one another. In other word, only one of the criterion may be applied. Thus, the monomer 11/dimer 12 couple(s) may be selected from any of the improvements.

The improvements may be considered in combination.

One considered improvement may be taken in combination with one, several or all of the other improvements. In other word, the monomer 11/dimer 12 couple(s) may be selected according to two or more of the criteria.

As an illustrative example of combination, the first, third and fourth improvements are considered in combination. According to this combination forty-one monomer 11/dimer 12 couples meet the first, third and fourth criteria. The couple number (provided in table 1) of the forty-one monomer 11/dimer 12 couples satisfying the first, third and fourth criteria are reported in table 6.

One can see that the monomer 11/dimer 12 couples selected through the combination of the first, third and fourth improvements are the same as the monomer 11/dimer 12 couples selected by applying the fourth criterion alone. This is due to the high limitation provided by the fourth criterion.

**Table 6**

| Couples number |
|---|
| II |
| III |
| XII |
| XIII |
| XVIII |
| XIX |
| XX |
| XXI |
| XXII |
| XXIII |
| XXVIII |
| XXX |
| XXXI |
| XXXV |
| XXXVI |
| LII |
| LIII |
| LIV |
| LXIV |
| LXIX |
| LXXI |
| LXXII |
| LXXIV |
| LXXVIII |
| LXXIX |
| LXXX |
| LXXXI |
| LXXXII |
| LXXXIV |
| LXXXV |
| LXXXVI |
| LXXXVII |
| XC |
| XCI |
| XCII |
| XCIII |
| XCIV |
| XCV |
| XCVI |
| XCVII |
| XCVIII |

Regarding the non-limiting embodiments, the choice of the criterion/criteria to be applied is, preferably, made according to one considered thermodynamic conversion machine (i.e. according to a specific application). Thus, the criteria, preferably the value(s) of the criteria/criterion, may be adapted according to a considered conversion machine or a type of conversion machine and/or according to the specific working parameters of the considered conversion machine or the type of conversion machine.

Still regarding the non-limiting embodiments, it may be highlighted that the couples (i.e. the number of couples identified) satisfying the criterion/criteria depend on the temperature (i.e. the specific working parameters of one considered conversion machine) at which the calculations are made.

Preferably, the operating range considered in the non-limiting embodiment are comprised between 253 and 1000 K and 0.01 and 300 bars. As non-limiting examples the operating range are comprised between:
- 283 K et 1000 K and between 0.01 and 300 bars in power plants,
- 253 K and 500 K and 0.01 and 100 bars in heat pumps,
- 253 K and 353 K and 0.01 and 100 bars for refrigeration applications.

Due to the temperature used for the calculations of the kinetic constants (kₐ, k_{d}) and the relaxation time τ, the monomer 11/dimers 12 couples according to the improvements are particularly, but not exclusively, suitable for power plants applications (that is temperature comprised between 283 and 1000 K).

As illustrating and non-limiting examples, the monomer 11/dimer 12 couples according to the non-limiting embodiment selected by the combination of the first, third and fourth improvements for power plants applications (1000 K), heat pumps applications (500 K) and refrigeration applications (353 K) are listed in table 7.

**Table 7**

| Power plant applications | Heat pump applications | refrigeration applications |
|---|---|---|
| II | XVIII | XXXI |
| III | XXXI | XXXII |
| XII | XXXII | XXXIV |
| XIII | XXXIV | LII |
| XVIII | LII | LIII |
| XIX | LIII | LIV |
| XX | LIV | LXXII |
| XXI | LXIV | LXXIII |
| XXII | LXXI | LXXIV |
| XXIII | LXXII | LXXXVI |
| XXVIII | LXXIII | LXXXVII |
| XXX | LXXIV | XCVI |
| XXXI | LXXXI | XCVII |
| XXXV | LXXXII | |
| XXXVI | LXXXIV | |
| LII | LXXXV | |
| LIII | LXXXVI | |
| LIV | LXXXVII | |
| LXIV | XCV | |
| LXIX | XCVI | |
| LXXI | XCVII | |
| LXXII | XCVIII | |
| LXXIV | | |
| LXXVIII | | |
| LXXIX | | |
| LXXX | | |
| LXXXI | | |
| LXXXII | | |
| LXXXIV | | |
| LXXXV | | |
| LXXXVI | | |
| LXXXVII | | |
| XC | | |
| XCI | | |
| XCII | | |
| XCIII | | |
| XCIV | | |
| XCV | | |
| XCVI | | |

Preferably, but not necessarily, the working fluid 10 according to the invention comprises monomer 11/dimer 12 couples having a relaxation time τ lower than or equal to preferably to 0.6 second (s), more preferably to 0.5, most preferably to 0.4, even most preferably to 0.3, particularly advantageously to 0.2, particularly advantageously to 0.1, more particularly advantageously to 0.01, even more particularly advantageously to 0.01, in a particularly advantageous manner to 0.001 and in the most preferred manner to 0.0001 s.

Preferably, but not necessarily, the working fluid 10 according to the invention comprises monomer 11/dimer 12 couples having a (kₐ) constant higher than or equal to 1×10⁵ cm³.mol⁻¹.s⁻¹, preferably to 1×10⁶, more preferably to 1×10⁷, most preferably to 1×10⁸, even most preferably to 1×10⁹, particularly advantageously to 1×10⁹, particularly advantageously to1×10¹⁰, more particularly advantageously to 1×10¹¹, even more particularly advantageously to 1×10¹², in a particularly advantageous manner to 1×10¹³ and in the most preferred manner to 2×10¹³ cm³.mol⁻¹.s⁻¹.

Monomer 11/dimer 12 couples having a (kₐ) as listed in the previous paragraph may advantageously contribute to increase the dissociation of dimer 12 into monomer 12.

Preferably, but not necessarily, the working fluid 10 according to the invention comprises monomer 11/dimer 12 couples having a (k_{d}) constant higher than or equal to 1×10² s⁻¹, preferably to 1×10³, more preferably to 1×10⁴, even more preferably to 1×10⁵, most preferably to 1×10⁶, even most preferably to 1×10⁷, particularly advantageously to 1×10⁸, particularly advantageously to1×10⁹, more particularly advantageously to 1×10¹⁰, even more particularly advantageously to 1×10¹¹, in a particularly advantageous manner to 1×10¹² and in the most preferred manner to 1×10¹³ s⁻¹.

Monomer 11/dimer 12 couples having a (k_{d}) as listed in the previous paragraph may advantageously contribute to increase the dissociation of dimer 12 into monomer 12.

Preferably, but not necessarily, the working fluid 10 according to the invention comprises monomer 11/dimer 12 couples having an enthalpy of reaction (Δ_{R}H°_{298K}) lower than or equal to 300 kJ/mol, preferably to 250, more preferably to 200, most preferably to 160, even most preferably to 140, particularly advantageously to 120, particularly advantageously to 105, more particularly advantageously to 95, even more particularly advantageously to 75, in a particularly advantageous manner to 60 and in the most preferred manner to 55 kJ/mol.

Monomer 11/dimer 12 couples having an enthalpy of reaction (ΔH) as listed in the previous paragraph may advantageously contribute to increase the reversibility of the association/dissociation of the monomers 11/dimers 12.

Preferably, the working fluid 10 according to the invention comprises monomer 11/dimer 12 couples having an electronegativity difference between X and at least one of the Rᵢ (one of the substituent) higher than or equal to 0.3, preferably to 0.34, more preferably to, most preferably to, even most preferably to 0.38, particularly advantageously to 0.42, particularly advantageously to 0.48, more particularly advantageously to 0.52, even more particularly advantageously to 0.56, in a particularly advantageous manner to 0.6 and in the most preferred manner to 0.64.

The electronegativity difference between X and at least one of the Rᵢ may advantageously contribute to increase (k_{d}) constant and/or to reduce the relaxation time τ and/or to increase the variation of the molar fraction x_{M} of the monomers 11 and/or the molar fraction x_{D} of the dimers 12.

Preferably, the working fluid 10 according to the invention comprises monomer 11/dimer 12 couples having an electronegativity difference between one Rᵢ (one of the substituent)and at least one other of the Rᵢ (at least one of the substituent) higher than or equal to 0.2, preferably to 0.25, more preferably to, most preferably to, even most preferably to 0.3, particularly advantageously to 0.35, particularly advantageously to 0.4, more particularly advantageously to 0.45, even more particularly advantageously to 0.5, in a particularly advantageous manner to 0.55 and in the most preferred manner to 0.6.

The electronegativity difference between one Rᵢ and at least one other of the Rᵢ may advantageously contribute to increase the stability of the monomer 11.

As already described in further details, the choice of the working fluid 10, and in particular of the monomer 11/dimer 12 couple, is advantageously done according to the operating mode of the thermodynamic machine. For instance, some of the monomer 11/dimer 12 couples having moderately satisfactory kinetic and/or thermodynamic features may be mixed with a part of additives (30 or less, 20 less, 10% or less, or 5% or less, in mass percentage).

According to the invention, it is also provided the use of the working fluid 10 according to the invention in a thermodynamic machine 1 operating in cooling mode, a refrigeration machine for instance. The working fluid 10 or the compound 12 after the compression phase of the cycle is completely, or at least mostly, in monomers 12 form.

During the cooling phase of the thermodynamic cycle, the working fluid 10 or the compound 12 or the monomers 12 undergoes a partial association into dimers 11, that is only a part of the compound 12 or the monomers 12 undergoes an association into dimers 11. After the cooling phase, the working fluid 10 preferably comprises dimers 11 and monomers 12. During the cooling phase, (that is the cooling of the working fluid 10 or the heating of the environment), the working fluid 10 undergoes an exothermic reaction due to the association of a part of the monomers 12 into dimers 11. Thus, the efficiency of the energy conversion during the thermodynamic cycle is further increased.

During the expansion phase of the thermodynamic cycle, the working fluid 10 or the compound 12 may undergo a further association of the entire remaining monomers 12 into dimers 11. After the expansion phase, the working fluid 10 comprises mainly, preferably only, dimers 11. Indeed, it is beneficial to have a complete association of the remaining monomers 12 into dimers 11 during the expansion phase. This allows the working fluid 10 to be only in its dimer form after the expansion phase and thus, to make the most of the endothermic reaction that will happened during the following heating phase (the description of the heating is given in the next paragraph). Thus, the efficiency of the energy conversion during the thermodynamic cycle is further increased.

During the heating phase of the thermodynamic cycle, two alternatives may be beneficial depending on the particular case in point (for instance depending on the place of use (climate, outside temperature...), typology of the thermodynamic machine used, the specific working fluid 10 used...).

In a first alternative, the working fluid 10 or the dimers 11 undergoes a complete dissociation into monomers 12, or at least most of the dimers 11 undergoes a dissociation into monomers 12. After the heating phase, the working fluid 10 comprises only monomers 12, or comprises mostly monomers 12 and some dimers 11 in a lower extent. During the heating phase, the reactive working fluid 10 according to the invention allows to increase the heat quantity absorbed or collected from the environment, which is the useful effect. Indeed, during the heating phase (that is the heating of the working fluid 10 and the cooling of the environment), the working fluid 10 undergoes an endothermic reaction due to the dissociation of, most of, preferably the whole of, the dimers 11 into monomers 12. Thus, the efficiency of the energy conversion during the thermodynamic cycle is further increased. In the first alternative, since the working fluid 10 comprises only dimers 11, or comprises mostly monomers 12 and some dimers 11 in a lower extend, after the heating phase, it is not possible to benefit from the endothermic reaction during the following compression phase anymore.

In a second alternative, the working fluid 10 or the dimers 11 undergoes a partial dissociation into monomers 12, or only some of the dimers 11 undergoes a dissociation into monomers 12. After the heating phase, the working fluid 10 comprises monomers 12 and dimers 11. As for the first alternative, in the second alternative, the reactive working fluid 10 according to the invention still allows to increase the heat quantity absorbed or collected from the environment but in a lower extent compare to the first alternative (due to a lower amount of dimers 11 dissociated during the heating phase compare to the first alternative). Nevertheless, the efficiency of the energy conversion during the heating phase is still increased compared to the working fluids of the state of the art. In the second alternative, since the working fluid 10 comprises monomers 12 and dimers 11 after the heating phase, the benefit from the endothermic reaction during the following compression phase (due to the presence of a significant amount of dimers 11 in the working fluid 10 during the compression phase) is used.

According to the invention, it is also provided the use of the working fluid 10 according to the invention in a thermodynamic machine 1 operating in power mode, a power plant for instance. The working fluid 10 or the compound 12 after the compression phase of the cycle is completely, or at least mostly, in monomers 12 form.

During the cooling phase of the thermodynamic cycle, the working fluid 10 or the compound 12 or the monomers 12 undergo a partial association into dimers 11, that is only a part of the compound 12 or the monomers 12 undergo an association into dimers 11. After the cooling phase, the working fluid 10 preferably comprises dimers 11 and monomers 12. During the cooling phase, (that is the cooling of the working fluid 10 or the heating of the environment), the working fluid 10 undergoes an exothermic reaction due to the association of a part of monomers 12 into dimers 11. Thus, the efficiency of the energy conversion during the thermodynamic cycle is further increased.

During the expansion phase of the thermodynamic cycle, the working fluid 10 or the compound 12 or the monomers 12 undergoes a complete association into dimers 11, or at least most of the compound 12 or the monomers 12 undergoes an association into dimers 11. After the expansion phase, the working fluid 10 preferably comprises only dimers 11, or comprises mostly dimers 11 and monomers 12 in a lower extent. During the expansion phase, according to the embodiment, the reactive working fluid 10 according to the invention allows to increase the work quantity extracted from the working fluid 10 or released in the environment (the mechanical work extracted by turbines for instance), which is the useful effect. Indeed, during the expansion phase (that is the expansion of the working fluid 10 or the mechanical work transfer to the environment), the working fluid 10 undergoes an exothermic reaction due to the association of, most of, preferably the whole of, the monomers 12 into dimers 11. Thus, the efficiency of the energy conversion during the thermodynamic cycle is further increased.

During the heating phase of the thermodynamic cycle, the working fluid 10 or the compound 12 or dimers 11 undergo a dissociation into monomers 12. After the heating phase, the working fluid 10 comprises monomers 12 and dimers 11. Indeed, during the heating phase (that is the heating of the working fluid 10 or the cooling of the environment), the working fluid 10 undergoes an endothermic reaction due to the dissociation of only a part of the dimers 11 into monomers 12. Thus, the efficiency of the energy conversion during the thermodynamic cycle is further increased.

It is also provided a cyclic thermodynamic conversion machine which comprises the reactive working fluid 10 according to the invention.

The cyclic thermodynamic conversion machine further comprises means for compressing a working fluid 10, means arranged to cool down the working fluid 10, means arranged for working fluid 10 expansion and means arranged to heat up the working fluid. The cyclic thermodynamic conversion machine is arranged to:
- dissociate, partly only or at least partly or in its entirety, the working fluid 10 into monomers 12 within the means for compressing the working fluid 10,
- associate, partly only or at least partly or in its entirety the working fluid 10 into dimers 11 within the means arranged to cool down the working fluid 10,
- associate, partly only or at least partly or in its entirety the working fluid 10 into dimers 11 within the means arranged to expand the working fluid 10,
- dissociate, partly only or at least partly or in its entirety the working fluid 10 into monomers 12 within the means arranged to heat up the working fluid 10.

Preferably, the component of the cooling heat exchanger and/or of the heating heat exchanger, in which the working fluid 10 circulates, or is intended to circulate, is a heat exchanger.

The heating heat exchanger is arranged to carry out the heating phase according to the invention and the cooling heat exchanger is arranged to carry out the cooling phase according to the invention. The above description relating to the heating phase and the cooling phase applies mutatis mutandis for the heating heat exchanger and the cooling heat exchanger.

The heating heat exchanger may be an evaporator and the cooling heat exchanger may be a condenser.

Preferably, the cyclic thermodynamic conversion machine comprises flow means for the working fluid though the components (means for compressing the working fluid, means arranged to cool down the working fluid, means arranged to expand the working fluid and means arranged to heat up the working fluid) of the cyclic thermodynamic conversion machine.

Within the means for cooling the working fluid 10, the reactive working fluid 10 according to the invention will increase the heat quantity released to the environment, which is the useful effect. Indeed, during the cooling phase (that is the cooling of the working fluid 10 or the heating of the environment), the working fluid 10 undergoes an exothermic reaction due to the association of, at least a part or a part only or the entirety of, the monomers 12 into dimers 11. Thus, the efficiency of the energy conversion during the thermodynamic cycle is further increased.

Within the heating heat exchanger, the reactive working fluid 10 according to the invention allows to increase the heat quantity absorbed or collected from the environment, which is the useful effect. Indeed, during the heating phase (that is the heating of the working fluid 10 or the cooling of the environment), the working fluid 10 undergoes an endothermic reaction due to the dissociation of, at least a part or a part only or the entirety of, the dimers 11 into monomers 12. Thus, the efficiency of the energy conversion during the thermodynamic cycle is further increased.

Within the means arranged for working fluid 10 expansion, the reactive working fluid according to the invention allows to increase the work quantity extracted from the working fluid 10 or the mechanical work extracted by turbines, which is the useful effect. Indeed, during the expansion phase (that is the expansion of the working fluid 10 or the mechanical work transfer to the environment), the working fluid 10 undergoes an exothermic reaction due to the association of, at least a part or a part only or the entirety of, the monomers 12 into dimers 11. Thus, the efficiency of the energy conversion during the thermodynamic cycle is further increased.

Within the means for compressing the working fluid 10, the reactive working fluid 10 according to the invention allows to decrease the quantity of energy required for the compression of the fluid (that is the energy required to carry out the thermodynamic cycle). Indeed, during the compression of a reactive working fluid 10 according to the invention, the working fluid 10 undergoes an endothermic reaction due to the dissociation of, at least a part or a part only or the entirety of, the dimers 11 into monomers 12. The compression of a fluid increases the pressure of the fluid, which tends (thermodynamic effect) to increase its temperature. The effect of increasing the temperature, predominant with respect to the opposite effect of increasing pressure, enables the endothermic reaction to take place during the compression phase that tends to maintain the working fluid 10 colder than in case of using inert working fluids. Thus, since the compression of a colder fluid requires less energy than a hot fluid, the efficiency of the energy conversion during the thermodynamic cycle is further increased.

To illustrate the use of the reactive working fluid 10 according to the invention in a cyclic thermodynamic conversion machine, it is also described, as a non-limiting embodiment, a heat pump 1 comprising such reactive working fluid 10.

Regarding the heat pumps, there may exhibit several operating modes. The most common typology, which is the sole used in the domestic domain, is the "vapor compression" heat pump 1 which is illustrated FIGURE 1. In this technology, the working fluid changes according to a thermodynamic cycle comprising four thermodynamic transformations or phases comprising:
- absorbing thermal energy in the heater 5, through vaporization or gaseous heating of the working fluid, which is supplied by the external environment while cooling the external environment,
- compressing the working fluid in the compressor 2, while the working fluid remains in the gas phase, which increases the pressure of the working fluid to its maximum value and, consequently, increases the temperature of the working fluid to its minimum value of the thermodynamic cycle,
- transferring the thermal energy of the working fluid to the external environment while heating the external environment, by cooling down the working fluid in the condenser 3,
- reducing the pressure of the working fluid in the expansion valve 4 which reduces the pressure of the working fluid to its minimum value and, consequently, decreases the temperature of the working fluid to its minimum value of the thermodynamic cycle.

The heat pump 1 according to the embodiment comprises the reactive working fluid 10 according to the invention. The heat pump 1 further comprises means 2 for compressing the reactive working fluid 10. The means for compressing 2 the working fluid may be a compressor 2 or any equivalent means. The heat pump 1 further comprises means 3 arranged to condensate the reactive working fluid 10. The means to condensate 2 the working fluid may be a condenser 2 or any equivalent means. The heat pump 1 further comprises means 4 arranged to expand the reactive working fluid 10. The means to expand 4 the working fluid 10 may be an expansion valve 4 or any equivalent means. The heat pump 1 further comprises means 5 arranged to evaporate the working fluid 10. The means to evaporate 5 the working fluid 10 may be an evaporator 5 or any equivalent means.

Preferably, the heat pump 1 is arranged so that:
- the means 2 for compressing the working fluid 10 dissociate, at least partly but preferably in its entirety, the working fluid 10 or the dimers 11 into monomers 12,
- the means 3 arranged to cool the working fluid 10 associate, at least partly but preferably in its entirety, the working fluid 10 or the monomers 12 into dimers 11,
- the means 4 arranged to expand the working fluid 10 may associate, but not necessarily, only a part of the working fluid 10 or the monomers 12 into dimers 11,
- the means 5 arranged to heat the working fluid 10 dissociate, at least partly, preferably partly only, the working fluid 10 or the dimers 11 into monomers 12.

The skilled person has the general knowledge to transpose the specific description of the heat pump 1 and of the use of the working fluid 10 in a heat pump 1 according to the non-limiting embodiments to any cyclic thermodynamic conversion machine. The technical effects provided by the reactive working fluid 10 according to the invention, in particular those resulting from reversibly association/dissociation of the reactive working fluid 10 to form dimer/monomer respectively, will benefit and apply to any cyclic thermodynamic conversion machine.

Thus, any feature of the working fluid 10 made in the present document can be directly transposed or included in the cyclic thermodynamic conversion machine(s) according to the invention and conversely.

Hence, it is also provided a cyclic thermodynamic conversion machine operating in refrigeration mode, said refrigeration machine, comprising the reactive working fluid 10 according to the invention.

In particular, it is provided a refrigeration machine comprising the reactive working fluid 10 according to the invention.

Preferably, the refrigeration machine is arranged so that:
- the means for compressing the working fluid 10 dissociate, at least partly but preferably in its entirety, the working fluid 10 or the dimers 11 into monomers 12,
- the means arranged to cool the working fluid 10 associate, at least partly and preferably partly only, the working fluid 10 or the monomers 12 into dimers 11,
- the means arranged to expand the working fluid 10 associate, at least partly but preferably in its entirety of the working fluid 10 or the monomers 12 into dimers 11,
- the means arranged to heat the working fluid 10 dissociate, at least partly, partly only or in its entirety, the working fluid 10 or the dimers 11 into monomers 12.

Hence, it is also provided a cyclic thermodynamic conversion machine operating in power mode, said power machine, comprising the reactive working fluid 10 according to the invention.

In particular, it is provided a power plant comprising the reactive working fluid 10 according to the invention.

Preferably, the power machine or the power plant is arranged so that:
- the means 2 for compressing the working fluid 10 dissociate, at least partly but preferably in its entirety, the working fluid 10 or the dimers 11 into monomers 12,
- the means arranged to cool the working fluid 10 associate, at least partly and preferably partly only, the working fluid 10 or the monomers 12 into dimers 11,
- the means arranged to expand the working fluid 10 associate, at least partly but preferably in its entirety, the working fluid 10 or the monomers 12 into dimers 11,
- the means arranged to heat the working fluid 10 dissociate, at least partly and preferably partly only, the working fluid 10 or the dimers 11 into monomers 12.

The use of the reactive working fluid 10 in a heat pump 1, or a heat pump 1 comprising the reactive working fluid 10, will provide an increase by 100% of the coefficient of performance (COP) defined as the ratio between the quantity of heat supplied externally (to the environment, through the heat exchanger cooling down the working fluid), which is the useful effect, and the electrical/mechanical energy required to fluid compression (the price to pay). The COP thus results to be doubled with respect to the heat pump of the state of the art. The COP currently achieved by residential heat pumps of the state of the art reaches a maximum of 4 while the COP of the heat pump 1 according to the state of the art reaches 8.

In another example, the use of the reactive working fluid 10 in a power plant, or a power plant comprising the reactive working fluid 10, will allow an increase by 200% of the specific electrical power, specific to the mass flow rate of the working fluid, produced by such power plant, with respect to comparable inert fluids. The specific net power thus results to be tripled with respect to power plants of the state of the art.

The use of the reactive working fluid 10 in a power plant, or a power plant comprising the reactive working fluid 10, will provide an improvement of 30% efficiency (increase by +30% compared to the current efficiency achieved by power plants according to the state of the art).

The invention is not restricted to embodiments described above and numerous adjustments may be made within the scope of the invention.

In addition, the different features, forms, variants and embodiments of the invention can be associated with each other in various combinations as long as they are not incompatible or exclusive of each other.

Thus, in variants that can be combined with each other of the previously described embodiments:
- the substituents Ri may be identical or different, in whole or in part, and/or
- when j equal to 1:
   - X is O, and R₁ is F, Cl, Br or I, or
   - X is S, and R₁ is F, Br or I, or
   - X is B, P, N, Cl, Br or I, and R₁ is O, or
   - X is B, P, N, Br or I, and R₁ is S, and/or
- when j equal to 1:
   - X is selected from B, P, N, Cl, Br or I, and R₁ and R₂ are selected from F, Cl, Br, 5 or I, or
   - X is selected from B, P, Cl, Br or I, and R₁ and R₂ are selected from F, Cl, Br, S, O or I, and/or
- although the monomer 11/dimer 12 couples comprising Iodine have not been detailed and described in the non-limiting embodiment, at least 50 monomer 11/dimer 12 couples comprising Iodine are found to be stable.

## Claims

1. Reactive working fluid for cyclic thermodynamic conversion machines, said working fluid, comprising a monomer/dimer couple capable of reversibly associating/dissociating, during each thermodynamic cycle, by covalent bond(s) formation/breakage; said monomer/dimer couple being of formula 2(Rᵢ-X^{•}) / Rᵢ-X-X-Rᵢ, wherein:
- Rᵢ is/are substituent(s) bonded to each atom X, i being equal to 1, 2, 3, 4, 5 or 6,
- each Rᵢ is different from X,
- one considered substituent (Rᵢ) is different from or identical to another, several or each of the other substituents,
- j is the number of substituent(s) Rᵢ bonded to each atom X, j being comprised between 1 and 6,
- each Rᵢ and X are selected from F, Cl, Br, I, O, S, B, N, P and C,
- each Rᵢ is an atom at its lowest valence state, and wherein
- for j equal to 1:
• X is O, and R₁ is F, Cl, Br or I, or
• X is S, and R₁ is F, Br or I, or
• X is B, P, N, Cl, Br or I, and R₁ is O, or
• X is B, P, N, Br or I, and R₁ is S, and
- for j equal to 2:
• X is selected from B, P, N, Cl, Br or I, and R₁ and R₂ are selected from F, Cl, Br, 5 or I, or
• X is selected from B, P, Cl, Br or I, and R₁ and R₂ are selected from F, Cl, Br, S, O or I.

2. Working fluid according to claim 1, wherein the monomer/dimer couple being selected from the list of formulae 1 to 21: 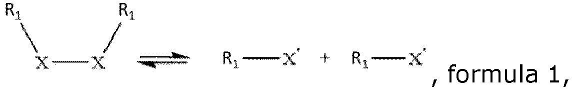 wherein X is O, and R₁ is F, Cl, Br or I; or X is S, and R₁ is F, Br or I, 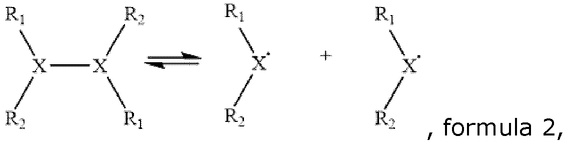 wherein X is B, P, N, Cl, Br or I, and R₁ and R₂ is/are selected from F, Cl, Br and I, 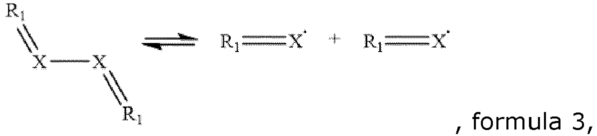 wherein X is B, P, N, Cl, Br or I, and R₁ is O; or X is B, P, N, Br or I, and R₁ is S, 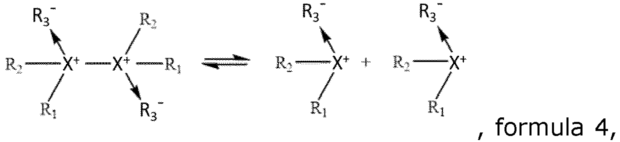 wherein X is N, and R₁ and R₂ is/are selected from F, Cl, Br or I, and R₃ is O, 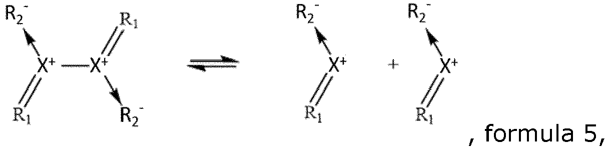 wherein X is N, and R₁ is S, and R₂ is O, 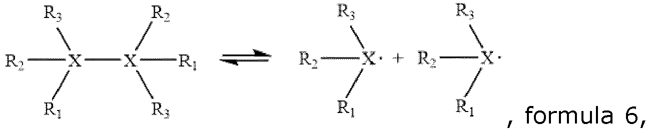 wherein X is C or S, and R₁, R₂ and R₃ is/are selected from F, Cl, Br and I, 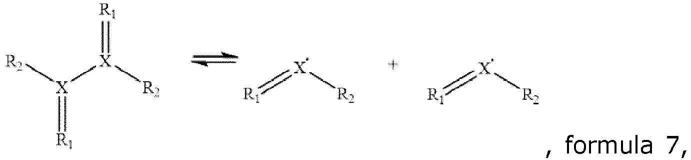 wherein X is C or S, and R₁ is selected from O and S, and R₂ is selected from F, Cl, Br and I, 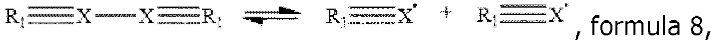 wherein X is C or S, and R₁ is selected from B, P and N, 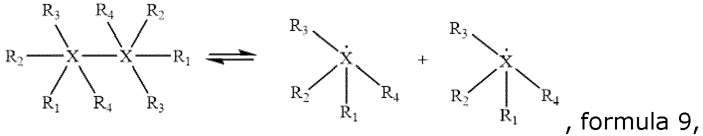 wherein X is P, Cl, Br or I, and R₁, R₂, R3 and R4 is/are selected from F, Cl, Br and I, 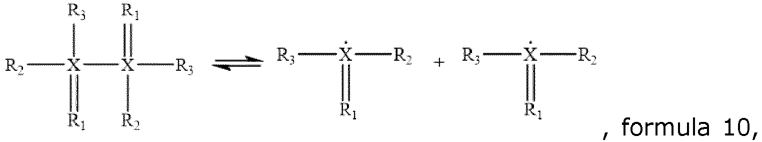 wherein X is P, Cl, Br or I, and R₁ is selected from O and S, and R₂ and R₃ is/are selected from F, Cl, Br and I, 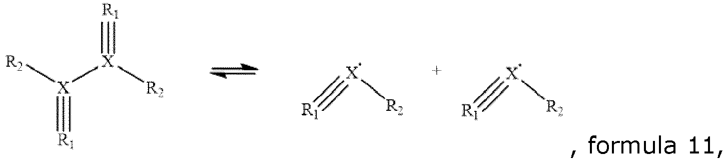 wherein X is P, Cl, Br or I, and R₁ is selected from B, P and N, and R₂ is selected from F, Cl, Br and I, 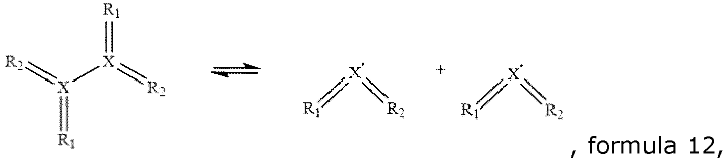 wherein X is P, Cl, Br or I, and R₁ and R₂ is/are selected from O and S, 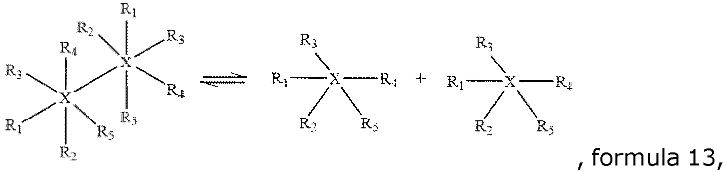 wherein X is S, and R₁, R₂, R₃, R₄ and R₅ is/are selected from F, Cl, Br and I, 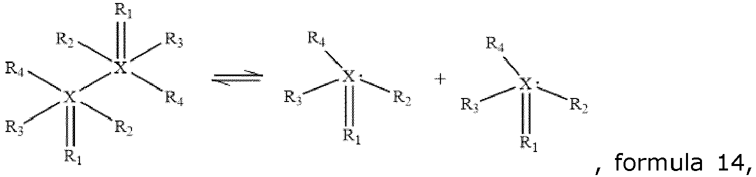 wherein X is S, and R₁ is selected from O and S, and R₂, R₃ and R₄ is/are selected from F, Cl, Br and I, 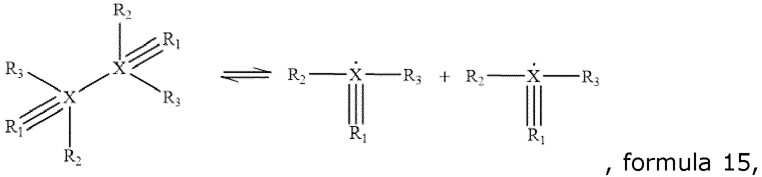 wherein X is S, and R₁ is selected from B, P and N, and R₂ and R₃ is/are selected from F, Cl, Br and I, 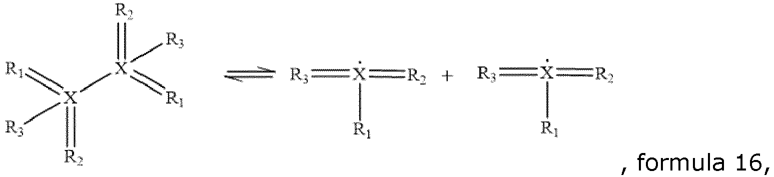 wherein X is S, and R₁ is selected from O and S, and R₂, R₃ and R₄ is/are selected from F, Cl, Br and I, 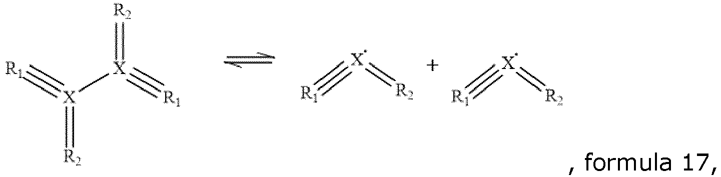 wherein X is S, and R₁ is selected from B, P and N, and R₂ is selected from O and S, 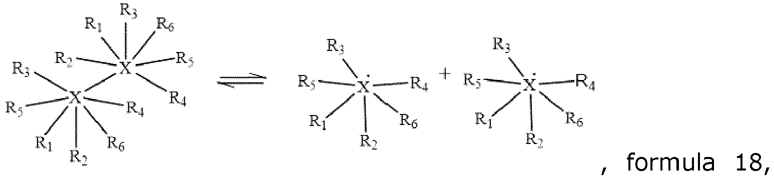 wherein X is selected from Cl, Br and I, and R₁, R₂, R₃, R₄, R₅, R₆ and R₇ is/are selected from F, Cl, Br and I, 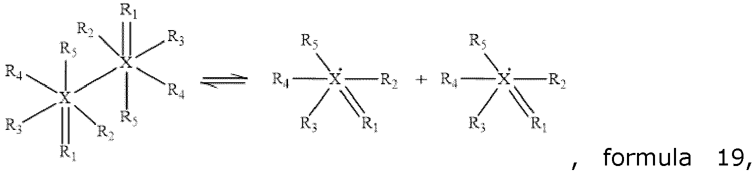 wherein X is selected from Cl, Br and I, and R₁ is O or S, and R₂, R₃, R₄, R₅ is/are selected from F, Cl, Br and I, 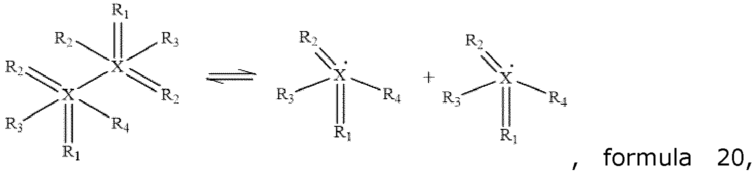 wherein X is selected from Cl, Br and I, and R₁ and R₂ is O or S, and R₃ and R₄, is/are selected from F, Cl, Br and I, 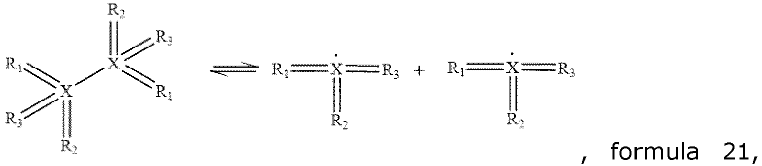 wherein X is selected from Cl, Br and I, and R₁, R₂ and R₃ is/are selected from O and S, 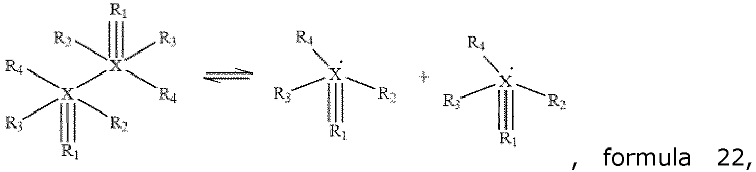 wherein X is selected from Cl, Br and I, and R₁ is B, P or N, and R₂, R₃ and R₄ is/are selected from F, Cl, Br and I, 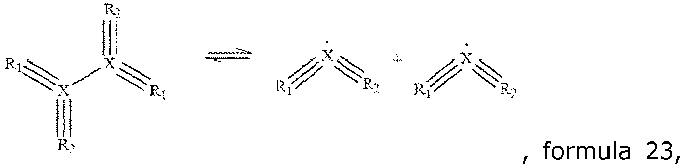 wherein X is selected from Cl, Br and I, and R₁ and R₂ is/are selected from B, P and N.

3. Working fluid according to claim 1 or 2, wherein, during each thermodynamic cycle, the monomer/dimer couple undergoes at least one covalent bond formation and at least one covalent bond breakage.

4. Working fluid according to any of claims 1 to 3, being unable unable to form or to incur breakage of van der Waals bonds between dimers, between monomers and/or between monomers and dimers.

5. Use of the reactive working fluid according to claims 1 to 4 in a cyclic thermodynamic conversion machine.

6. Use of the reactive working fluid according to claims 1 to 4 in a heat pump.

7. Use of the reactive working fluid according to claims 1 to 4 in a power plant.

8. Use of the reactive working fluid according to claims 1 to 4 in a refrigeration

9. Cyclic thermodynamic conversion machine comprising means for compressing a working fluid, means arranged to cool down the working fluid, means arranged to expand the working fluid and means arranged to heat up the working fluid; the working fluid comprises a monomer/dimer couple capable of reversibly associating/dissociating, during each thermodynamic cycle, by covalent bond(s) formation/breakage, said monomer/dimer couple being of formula 2(Rᵢ-X^{•}) / Rᵢ-X-X-Rᵢ, wherein:
- Rᵢ is/are substituent(s) bonded to each atom X, i being equal to 1, 2, 3, 4, 5 or 6,
- each Rᵢ is different from X,
- one considered substituent (Rᵢ) is different from or identical to another, several or each of the other substituents,
- j is the number of substituent(s) Rᵢ bonded to each atom X, j being comprised between 1 and 6,
- each Rᵢ and X are selected from F, Cl, Br, I, O, S, B, N, P and C,
- each Rᵢ is an atom at its lowest valence state, and wherein
- for j equal to 1:
• X is O, and R₁ is F, Cl, Br or I, or
• X is S, and R₁ is F, Br or I, or
• X is B, P, N, Cl, Br or I, and R₁ is O, or
• X is B, P, N, Br or I, and R₁ is S, and
- for j equal to 2:
• X is selected from B, P, N, Cl, Br or I, and R₁ and R₂ are selected from F, Cl, Br, 5 or I, or
• X is selected from B, P, Cl, Br or I, and R₁ and R₂ are selected from F, Cl, Br, S, O or I ;
said cyclic thermodynamic conversion machine is arranged to:
- dissociate, at least partly, the working fluid into monomers within the means for compressing the working fluid,
- associate, at least partly, the working fluid into dimers within the means arranged to cool down the working fluid,
- associate, at least partly, the working fluid into dimers within the means arranged to expand the working fluid,
- dissociate, at least partly, the working fluid into monomers within the means arranged to heat up the working fluid.

10. Cyclic thermodynamic conversion machine according to claim 9, wherein said cyclic thermodynamic conversion machine is a heat pump.

11. Cyclic thermodynamic conversion machine according to claim 9, wherein said cyclic thermodynamic conversion machine is a power plant.

12. Cyclic thermodynamic conversion machine according to claim 9, wherein said cyclic thermodynamic conversion machine is a refrigeration machine.
